(19) Europäisches Patentamt
European Patent Office
Office européen des brevets

(11) **EP 3 816 760 B1**

(12) **FASCICULE DE BREVET EUROPEEN**

(45) Date de publication et mention de la délivrance du brevet:
**06.11.2024 Bulletin 2024/45**

(21) Numéro de dépôt: **20195263.7**

(22) Date de dépôt: **09.09.2020**

(51) Classification Internationale des Brevets (IPC):
**G05D 23/19** *(2006.01)*

(52) Classification Coopérative des Brevets (CPC):
**G05D 23/1919; F24D 19/1063; F24H 9/2021; F24H 15/144; F24H 15/174; F24H 15/219; F24H 15/238; F24H 15/37; F24H 15/395;** F24H 15/414; F24H 15/457

(54) **PROCÉDÉ DE GESTION, DANS UN BALLON, D'UN VOLUME D'EAU DONT LA TEMPÉRATURE EST SUPÉRIEURE À UNE TEMPÉRATURE PRÉDÉTERMINÉE**

STEUERUNGSVERFAHREN FÜR EIN WASSERVOLUMEN IN EINEM TANK, DESSEN WASSERTEMPERATUR HÖHER IST ALS EINE VORGEGEBENE TEMPERATUR

METHOD FOR MANAGING, IN A TANK, A VOLUME OF WATER IN WHICH THE TEMPERATURE IS HIGHER THAN A PREDETERMINED TEMPERATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2019 FR 1909944**

(43) Date de publication de la demande:
**05.05.2021 Bulletin 2021/18**

(73) Titulaire: **Delta Dore**
**35270 Bonnemain (FR)**

(72) Inventeurs:
• **LEDUC, Benoit**
**35270 BONNEMAIN (FR)**
• **LE DUC, Minh Khang**
**35270 BONNEMAIN (FR)**
• **LEGUILLON, Maxime**
**35270 BONNEMAIN (FR)**
• **PLEVIN, Jacques**
**35270 BONNEMAIN (FR)**

(74) Mandataire: **Cabinet Le Guen Maillet**
**3, impasse de la Vigie**
**CS 71840**
**35418 Saint-Malo Cedex (FR)**

(56) Documents cités:
EP-A1- 3 394 518     EP-A2- 2 739 914
EP-B1- 2 739 914     EP-B1- 3 394 518
WO-A1-2014/087162     GB-A- 2 470 899

**Description**

DOMAINE TECHNIQUE

L'invention concerne un procédé et un dispositif de gestion, dans un ballon, d'un volume d'eau dont la température est supérieure à une température prédéterminée.

ETAT DE LA TECHNIQUE ANTERIEURE

Le fonctionnement standard d'un ballon à accumulation de type stratification est simple. Un thermostat commande la charge ou chauffage de l'eau à une température préréglée, par exemple 60°C. Le thermostat peut être asservi à une horloge afin de libérer sa puissance dans la journée et éviter des cycles de fonctionnement trop fréquents. Le thermostat peut aussi être asservi à une tarification avantageuse telle que par exemple le système heures creuses proposé en France.

La capacité du ballon est dimensionnée par rapport au nombre d'occupants de la maison. Le ratio utilisé est par exemple de 50 litres d'eau chaude par jour et par personne.

En France, le ratio pour dimensionner la résistance électrique est de 12 W / litre. Celui-ci permet de porter une eau de 15°C à 65°C avec un temps de chauffe de l'ordre de 5 heures.

Rien ne permet de connaître la capacité d'eau chaude restante dans un ballon traditionnel. C'est donc la baisse soudaine de la température qui indique que le ballon est vide. Certains fabricants de ballons ont intégré directement dans celui-ci un dispositif permettant d'indiquer la quantité résiduelle d'eau présente dans le ballon à une température supérieure à un seuil prédéterminé.

Plusieurs indicateurs existent, soit un pourcentage du ballon 0, 25, 50, 75 et 100% ou un repère en nombre de douches restantes.

Ces techniques ne permettent pas de contrôler la relance du chauffage de l'eau contenue dans le ballon et ne permettent pas d'éviter un manque d'eau chaude tout en prenant en compte l'aspect financier d'une relance du chauffage de l'eau contenue dans le ballon.

La demande de brevet EP 3394518 divulgue un système d'échange thermique et de stratification thermique pour un fluide secondaire contenu dans un réservoir d'une chaudière.

La demande de brevet EP 2739914 divulgue un contrôleur d'élément chauffant pour un système de chauffage de liquide agencé pour déterminer le cycle de service d'un élément chauffant et moduler le point de temps de démarrage du chauffage

La demande de brevet WO 2014 087162 divulgue un capteur pour mesurer la température d'un fluide à l'intérieur d'un récipient.

La demande de brevet GB 2470899 divulgue un cylindre d'eau de stockage thermique ayant au moins deux entrées d'eau chauffée pour fournir de l'eau chaude dans le cylindre.

Il est alors souhaitable de pallier ces inconvénients de l'état de la technique.

EXPOSE DE L'INVENTION

La présente invention a pour but de résoudre les inconvénients de l'art antérieur en proposant un dispositif et un procédé de gestion, dans un ballon, d'un volume d'eau dont la température est supérieure à une température prédéterminée de manière à éviter un manque d'eau chaude pour un utilisateur voire de signaler à celui-ci une éventuelle rupture de fourniture d'eau pendant un puisage d'eau chaude.

A cette fin, l'invention concerne un dispositif de gestion, dans un ballon, d'un volume d'eau dont la température est supérieure à une température prédéterminée, l'eau dans le ballon étant chauffée périodiquement dans une plage horaire prédéterminée par au moins une résistance pour arriver à une température de consigne, à chaque soutirage de l'eau du ballon, la même quantité d'eau que celle soutirée étant introduite dans le ballon, la quantité d'eau introduite étant à une température dite basse, le volume d'eau introduit dans le ballon à chaque soutirage d'eau du ballon formant une strate d'eau à la température basse et ne se mélangeant pas avec au moins une autre strate d'eau du ballon dont la température est différente, caractérisé en ce que le dispositif comporte :

- des moyens de détermination du débit de l'eau en sortie du ballon lorsque de l'eau est soutirée du ballon,
- des moyens de détermination du volume d'eau soutiré à la fin du soutirage de l'eau,
- des moyens de mise à jour du volume d'eau compris dans au moins une strate du ballon à partir du volume d'eau soutiré et de création d'une nouvelle strate si la température de la strate ayant la température la plus petite parmi les températures des strates du ballon est supérieure à la température basse,
- des moyens de mise à jour, lorsque l'eau du ballon est chauffée, des strates du ballon,

- des moyens de détermination du volume d'eau dans le ballon dont la température est supérieure ou égale à la température prédéterminée,
- des moyens de commande du chauffage d'au moins une partie de l'eau du ballon en dehors de la plage horaire prédéterminée si le volume d'eau dans le ballon dont la température est supérieure ou égale à une température d'eau prédéterminée est inférieur à un seuil.

L'invention concerne aussi un procédé de gestion, dans un ballon, d'un volume d'eau dont la température est supérieure à une température prédéterminée, l'eau dans le ballon étant chauffée périodiquement dans une plage horaire prédéterminée par au moins une résistance pour arriver à une température de consigne, à chaque soutirage de l'eau du ballon, la même quantité d'eau que celle soutirée étant introduite dans le ballon, la quantité d'eau introduite étant à une température dite basse, le volume d'eau introduit dans le ballon à chaque soutirage d'eau du ballon formant une strate d'eau à la température basse et ne se mélangeant pas avec au moins une autre strate d'eau du ballon dont la température est différente, caractérisé en ce que le procédé comporte les étapes de :

- détermination du débit de l'eau en sortie du ballon lorsque de l'eau est soutirée du ballon,
- détermination du volume d'eau soutiré à la fin du soutirage de l'eau,
- mise à jour du volume d'eau compris dans au moins une strate du ballon à partir du volume d'eau soutiré et de création d'une nouvelle strate si la température de la strate ayant la température la plus petite parmi les températures des strates du ballon est supérieure à la température basse,
- mise à jour, lorsque l'eau du ballon est chauffée, des strates du ballon,
- des moyens de détermination du volume d'eau dans le ballon dont la température est supérieure ou égale à la température prédéterminée,
- commande du chauffage d'au moins une partie de l'eau du ballon en dehors de la plage horaire prédéterminée si le volume d'eau dans le ballon dont la température est supérieure ou égale à une température d'eau prédéterminée est inférieur à un seuil.

Ainsi, il est possible d'éviter un manque d'eau chaude pour un utilisateur en anticipant une future consommation d'eau chaude qui serait supérieure au volume d'eau chaude restant dans le ballon.

Selon un mode particulier de réalisation, les moyens de détermination du débit de l'eau en sortie du ballon sont externes au ballon.

Ainsi, la présente invention peut être utilisée avec de multiples ballons existant sur le marché.

Selon un mode particulier de réalisation, le seuil est déterminé à partir d'une prédiction journalière du volume d'eau soutiré du ballon.

Ainsi, il est possible d'éviter un manque d'eau chaude pour un utilisateur en anticipant une future consommation d'eau chaude qui serait supérieure au volume d'eau chaude restant dans le ballon.

Selon un mode particulier de réalisation, le dispositif comporte en outre des moyens de détermination de la température de consigne qui mesurent la température de l'eau soutirée lors d'un premier soutirage d'eau consécutif à un chauffage de l'eau dans la plage horaire. Ainsi, la présente invention peut être utilisée avec de multiples ballons existant sur le marché.

Selon un mode particulier de réalisation, le dispositif comporte en outre des moyens de détermination de la puissance électrique délivrée à la au moins une résistance dans la plage horaire.

Ainsi, la présente invention peut être utilisée avec de multiples ballons existant sur le marché.

Selon un mode particulier de réalisation, les moyens de commande du chauffage d'au moins une partie de l'eau du ballon en dehors de la plage horaire prédéterminée déterminent en outre la quantité d'eau à chauffer en fonction d'une tarification de l'énergie électrique délivrée à la au moins une résistance.

Ainsi, la présente invention permet un chauffage de l'eau tout en prenant en compte le coût financier de celui-ci.

Selon un mode particulier de réalisation, le dispositif comporte en outre des moyens de notification que le volume d'eau dans le ballon, dont la température est supérieure ou égale à la température d'eau prédéterminée, est inférieur au seuil.

Selon un mode particulier de réalisation, la présente invention utilise des variables qui sont réinitialisées à la fin de chaque plage horaire prédéterminée.

Ainsi, la présente invention évite toute dérive dans le temps liée à d'éventuelles accumulations d'erreurs ou d'approximations.

Selon un mode particulier de réalisation, le dispositif comporte en outre des moyens de notification du volume d'eau dans le ballon dont la température est supérieure ou égale à la température d'eau prédéterminée.

L'invention concerne aussi un programme d'ordinateur, caractérisé en ce qu'il comprend des instructions pour mettre en oeuvre, par un dispositif, le procédé selon le premier aspect, lorsque ledit programme est exécuté par un processeur dudit dispositif.

EP 3 816 760 B1

L'invention concerne aussi des moyens de stockage, caractérisés en ce qu'ils stockent un programme d'ordinateur comprenant des instructions pour mettre en oeuvre, par un dispositif, le procédé selon le premier aspect lorsque ledit programme est exécuté par un processeur dudit dispositif.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] représente schématiquement un système de gestion, dans un ballon, d'un volume d'eau dont la température est supérieure à une température prédéterminée dans lequel la présente invention est implémentée ;
[Fig. 2] illustre schématiquement un exemple d'architecture matérielle d'un dispositif et de gestion de la quantité d'eau présente dans un ballon selon la présente invention ;
[Fig. 3] illustre schématiquement l'architecture logicielle de l'algorithme exécuté par le dispositif de gestion de la quantité d'eau présente dans un ballon selon la présente invention ;
[Fig. 4] illustre la formation de strates dans un ballon en fonction de soutirages d'eau chaude ;
[Fig. 5] illustre un exemple d'algorithme exécuté par le module de traitement des données ;
[Fig. 6] illustre un exemple d'un premier algorithme exécuté par le module de détermination de l'état du ballon ;
[Fig. 7] illustre un exemple d'un second algorithme exécuté par le module de détermination de l'état du ballon ;
[Fig. 8] illustre un exemple d'un troisième algorithme exécuté par le module de détermination de l'état du ballon ;
[Fig. 9] illustre un exemple d'un quatrième algorithme exécuté par le module de détermination de l'état du ballon ;
[Fig. 10] illustre un exemple d'un premier algorithme exécuté par le module de relance anticipée ;
[Fig. 11] illustre un exemple d'un second algorithme exécuté par le module de relance anticipée ;
[Fig. 12] illustre un exemple d'un troisième algorithme exécuté par le module de relance anticipée ;
[Fig. 13] illustre un exemple d'un algorithme exécuté par le module de commande ;
[Fig. 14] illustre un exemple d'un premier algorithme exécuté par le module alerte et affichage ;
[Fig. 15] illustre un exemple d'un algorithme exécuté par le module alerte et affichage.

EXPOSE DETAILLE DE MODES DE REALISATION

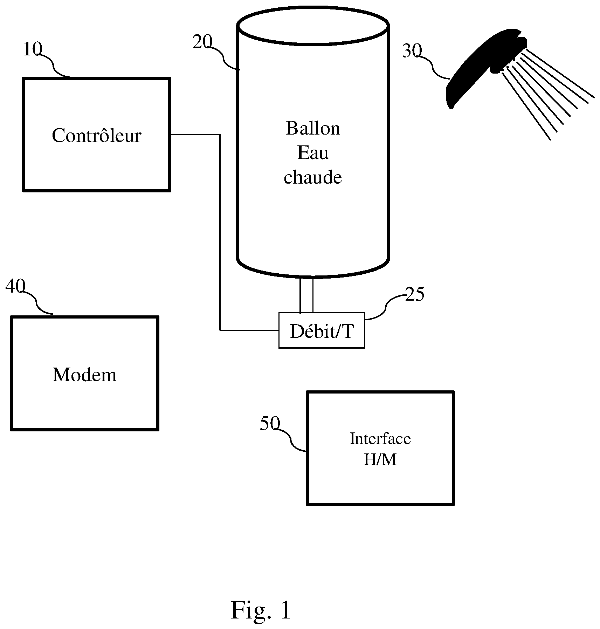

La Fig. 1 représente schématiquement un système de gestion de la quantité d'eau présente dans un ballon dans lequel la présente invention est implémentée.

Le système comporte un dispositif 10 de gestion de la quantité d'eau présente dans un ballon 20, un modem 40 permettant de relier le dispositif 10 de gestion de la quantité d'eau présente dans le ballon 20 à un réseau de communication de type internet, une interface homme machine 50 permettant de paramétrer et/ou d'interroger le dispositif 10 de gestion de la quantité d'eau présente dans le ballon 20 et des moyens de puisage 30 de l'eau comprise dans le ballon 20.

Le ballon 20 est un ballon d'eau chaude à stratification.

La densité de l'eau varie avec sa température. De manière simplifiée, plus l'eau est froide, plus elle est dense. Un litre d'eau froide est donc plus lourd qu'un litre d'eau chaude.

De par cette propriété, des eaux chaudes et froides mises dans un même contenant ont tendance à rester séparées en couches (en strates d'où le nom de stratification), les eaux chaudes au-dessus, les eaux froides en-dessous.

D'autre part, l'eau étant thermiquement relativement isolante, les échanges thermiques entre couches de températures différentes sont faibles, cela permet à l'organisation en couches de températures de durer. Ainsi, la stratification est un phénomène stable.

Les ballons 20 destinés au marché américain se composent de deux résistances. Le modèle le plus courant utilise deux résistances de 4.5 kW pour 200 litres. La résistance supérieure chauffe environ 35% de la capacité totale.

Les ballons américains ont leurs entrées/sorties hydrauliques placées en haut. Une canne amène l'eau froide dans le bas du ballon.

La technologie des ballons influe directement sur la stratégie de charge et de relance. Pour les ballons américains, la résistance du haut va s'enclencher avant la résistance du bas. Cela va permettre d'avoir une petite quantité d'eau chaude très rapidement.

Lors d'un puisage, l'eau chaude du ballon sort par le haut et est remplacée par de l'eau froide qui entre dans le bas du ballon. La sortie d'eau chaude et l'entrée d'eau froide se font au même débit pour pouvoir se compenser directement et avoir toujours la même quantité d'eau dans le ballon. Le phénomène de stratification permet aux eaux de températures différentes de ne pas se mélanger. Pour améliorer cette stratification, les ballons respectent certaines règles telles que l'eau chaude est prélevée par le haut du ballon (ou par le bas via une canne), l'eau froide est introduite

4

par le bas (ou par haut via une canne qui amène l'eau en bas) le plus doucement possible.

Dans l'exemple de la Fig. 1, la sortie d'eau chaude comporte un dispositif 25 de mesure de débit et de température de l'eau qui sort du ballon d'eau chaude.

Le dispositif 25 de mesure de débit et de température de l'eau qui sort du ballon est relié au dispositif 10 de gestion de la quantité d'eau présente dans le ballon 20 par l'intermédiaire d'une liaison sans fils ou filaire.

La mesure du débit est par exemple réalisée avec une micro-turbine associée à un capteur à effet hall qui produit un signal d'impulsion correspondant au débit.

La mesure de la température est par exemple effectuée avec une sonde de type CTN 50 kOhms directement immergée.

Afin de simplifier l'installation et la rendre accessible au grand public, le dispositif 25 de mesure de débit et de température de l'eau qui sort du ballon d'eau chaude est livré avec un flexible qu'il suffit de raccorder à la sortie d'eau chaude.

Le dispositif 10 de gestion de la quantité d'eau présente dans le ballon 20 commande la ou les résistances qui chauffent l'eau du ballon.

L'interface homme machine 50 est par exemple implémentée sous la forme d'une application sur un téléphone intelligent.

L'interface homme machine 50 permet de paramétrer le système en définissant par exemple la capacité du ballon, la température moyenne de l'eau froide en hiver, si une fonction de calibrage de l'eau froide doit être implémentée ou non, le paramétrage des périodes tarifaires, le coût kWh par période tarifaire, le type de fonctionnement, confort (relance automatique) ou économique (alerte puis relance si accord), la fourniture de bilan des consommations d'eau chaude journalière, hebdomadaire et annuelle.

Lors de l'utilisation du système, l'interface homme machine 50 permet l'affichage de la quantité d'eau chaude dans le ballon, la consommation journalière, hebdomadaire et annuelle. L'interface homme machine 50 notifie que la température de sortie du ballon pendant un soutirage devient trop basse, par exemple lorsque la température de sortie du ballon pendant un soutirage est inférieure ou égale à 39°C de manière à avertir les utilisateurs qu'il y a un risque d'arrivée d'eau froide.

La température moyenne de l'eau froide en hiver est la température moyenne en hiver du lieu où est installé le ballon. Une température d'eau froide en été à 20° donne une erreur de 20% sur le calcul final. Pour les régions où il y a une forte saisonnalité due à un puisage majoritairement dans les cours d'eau, contrairement aux nappes phréatiques, il est important de compenser cette évolution.

Après une durée conséquente sans débit, la température mesurée par le dispositif 25 de mesure de débit et de température de l'eau en sortie du ballon atteint la température de la pièce dans laquelle se trouve le ballon. Cette température permet de calibrer la température d'eau froide servant de température de consigne d'eau froide. Elle peut servir pour réaliser une fonction d'ajustement saisonnière selon une pente paramétrable selon la zone géographique définie par l'intermédiaire de l'interface homme machine 50.

L'interface homme machine 50 permet de sélectionner une fonction d'ajustement parmi plusieurs en fonction de la situation géographique du système.

L'acquisition de la température eau froide pour la correction de la température de consigne eau froide est réalisée après 2 heures sans soutirage. Elle est par exemple effectuée une fois par jour et moyennée sur par exemple sept valeurs glissantes.

L'interface homme machine 50 permet d'activer une phase d'apprentissage dans laquelle le capteur de température de l'eau permet de déduire le réglage du thermostat du ballon. Cette fonctionnalité est réalisée une fois au moment du premier soutirage suivant une charge complète du ballon 20.

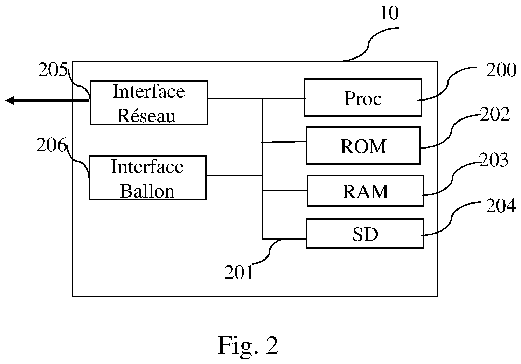

Lors de la phase d'apprentissage, le système profite de la première phase de charge pour mesurer la tension et le courant correspondant délivrés à la résistance du ballon de manière à en déduire la puissance délivrée à la résistance. Cette valeur en Watts est sauvegardée. La Fig. 2 illustre schématiquement un exemple d'architecture matérielle d'un dispositif de détermination et de gestion de la quantité d'eau présente dans un ballon selon la présente invention.

Le dispositif 10 de détermination et de gestion de la quantité d'eau présente dans un ballon comprend :

- un processeur, micro-processeur, ou microcontrôleur 200 ;
- une mémoire volatile 203 ;
- une mémoire non volatile 202 ;
- éventuellement, un lecteur 204 de medium de stockage tel qu'un lecteur de carte SD (Secure Digital Card en anglais ou Carte Numérique Sécurisée en français) ou un disque dur ;
- une interface réseau 205 comportant une interface Wi-Fi et/ou Zigbee et/ou X3D (nom commercial d'une liaison sans fil commercialisée par la demanderesse) ;
- une interface entrée sortie permettant d'obtenir le débit et la température sortant du ballon et de commander la ou les résistances du ballon 20 ;

- un bus de communication 201 reliant le processeur 200 à la mémoire ROM 202, à la mémoire RAM 203, au lecteur de médium de stockage 204 et aux interfaces 205 et 206.

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication.

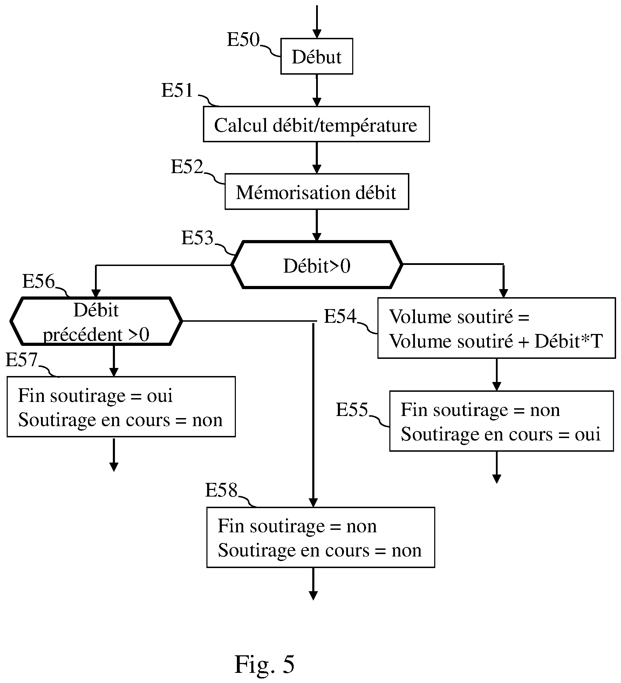

Lorsque dispositif 10 est mis sous tension, le processeur 200 est capable de lire de la mémoire volatile 203 des instructions et de les exécuter. Ces instructions forment un programme d'ordinateur qui cause la mise en oeuvre, par le processeur 200, de tout ou partie du procédé décrit en relation avec les Figs. 5 à 13.

Tout ou partie du procédé décrit en relation avec les Figs. 5 à 13 peut être implémenté sous forme logicielle par exécution d'un ensemble d'instructions par une machine programmable, telle qu'un DSP (Digital Signal Processor en anglais ou Unité de Traitement de Signal Numérique en français) ou un microcontrôleur ou être implémenté sous forme matérielle par une machine ou un composant dédié, tel qu'un FPGA (Field-Programmable Gate Array en anglais ou Matrice de Portes Programmable sur le Terrain en français) ou un ASIC (Application-Specific Integrated Circuit en anglais ou Circuit Intégré Spécifique à une Application en français).

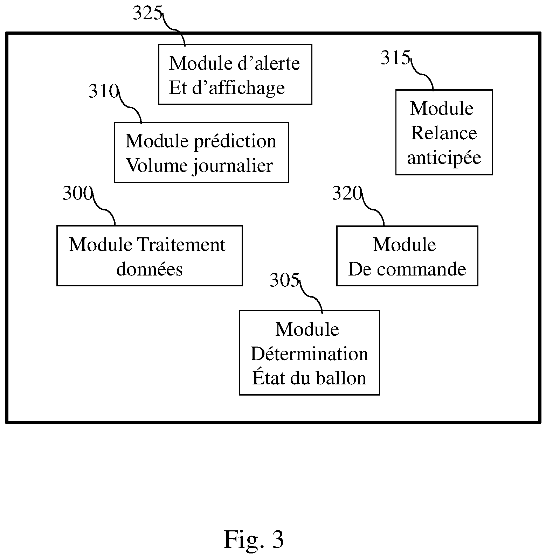

La Fig. 3 illustre schématiquement l'architecture logicielle de l'algorithme exécuté par le dispositif de gestion de la quantité d'eau présente dans un ballon selon la présente invention. L'algorithme exécuté par le dispositif 10 de gestion de la quantité d'eau, présente dans un ballon selon la présente invention, est constitué d'un module de traitement de données 300, d'un module de détermination de l'état du ballon 305, d'un module de prédiction du volume journalier d'eau chaude consommée 310, d'un module de relance anticipée 315, d'un module de commande 320 et d'un module d'alerte et d'affichage 325.

Les variables utilisées par chaque module sont réinitialisées à la fin de chaque plage horaire prédéterminée.

Le module de traitement de données 300 transforme les signaux représentatifs de la température et du débit délivrés par le dispositif 25 de mesure de température et de débit pour les autres modules. Le module de traitement de données 300 reçoit une valeur de résistance représentative de la température qui est transformée en une valeur de température. Le module de traitement de données 300 reçoit une fréquence représentative du débit qui est transformée en une valeur de débit. Ce débit vient incrémenter les valeurs de volume soutiré et met à jour les variables suivantes : soutirage en cours (oui/non), volume soutiré (L) et fin de soutirage (oui/non). Le module de traitement de données 300 exécute l'algorithme qui sera décrit en référence à la Fig. 5 par exemple toutes les 5 millisecondes afin d'avoir un nombre de valeurs de fréquence et de résistance important et donc de débit et de température. Le module de détermination de l'état du ballon 305 calcule le volume théorique de chaque strate du ballon et sa température associée.

Le module de détermination de l'état du ballon 305 est exécuté à la fin de chaque soutirage ou à la fin de chaque chauffe ou toutes les 30 minutes ou sur demande d'utilisateurs.

Le module de détermination de l'état du ballon 305 reçoit en entrée les sorties du module de traitement de données 300, les sorties du module de commande 320 ainsi que l'état précédent du ballon.

Le module de détermination de l'état du ballon 305 reçoit les valeurs des variables de soutirage en cours (oui/non), volume soutiré (L), fin de soutirage (oui/non), chauffe en cours (oui/non), fin de chauffe (oui/non), temps chauffé (minutes) et état du ballon (au temps précédent). Le module de détermination de l'état du ballon 305 connaît les différents paramètres qui ont été introduits ou calculés à l'initialisation tels que la puissance de la ou des résistances du ballon, la capacité globale du ballon, la température d'eau froide et la température d'eau chaude.

Le module de détermination de l'état du ballon 305 fournit un tableau de volume et de température (caractérisation d'une strate) appelé tableau état du ballon.

Le module de prédiction du volume journalier d'eau chaude consommée 310 utilise les données de volume du module de traitement de données 300. La valeur des données est intégrée sur 30 minutes et une estimation est effectuée toutes les 30 minutes pour fournir une estimation des utilisations en eau chaude pour les 12 prochaines heures par pas de 30 minutes.

Le module de relance anticipée 315 donne un ordre de chauffe pendant une durée associée qui est optimisé en fonction de la tarification et de la prédiction de consommation.

Le module de relance anticipée 315 est par exemple exécuté toutes les 30 minutes.

Le module de relance anticipée 315 reçoit en entrée l'état du ballon ainsi que les prédictions du module de prédiction du volume journalier d'eau chaude consommée 310. Le module de relance anticipée 315 utilise aussi la puissance de la ou des résistances du ballon, la capacité globale du ballon, la température de l'eau en sortie du ballon 20, la température d'eau chaude et la tarification.

Le module de relance anticipée 315 fournit un ordre de chauffe (on/off) et un temps de chauffe (en minutes).

Le module de commande 320 commande la fourniture en énergie électrique du ballon.

Le module d'alerte et d'affichage 325 a pour fonction de prévenir l'utilisateur qu'il y a un risque d'arrivée d'eau froide et d'indiquer le volume d'eau supérieure à 40 degrés disponible dans le ballon.

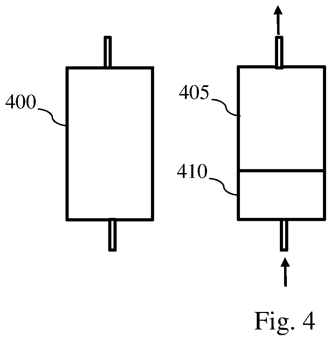

La Fig. 4 illustre la formation de strates dans un ballon en fonction de soutirages d'eau chaude.

Dans un premier temps, le ballon est rempli d'eau chaude, une seule strate 400 est présente. Lors d'un tirage d'eau chaude, le ballon comporte deux strates notées 405 et 410.

La Fig. 5 illustre un exemple d'algorithme exécuté par le module de traitement des données. Le présent algorithme est exécuté périodiquement, par exemple avec une périodicité de 5 millisecondes.

A l'étape E50, l'algorithme débute.

A l'étape E51, le module de traitement des données 300 calcule à partir de la fréquence et de la résistance reçues, le débit et la température de l'eau sortant du ballon.

A l'étape suivante E52, le module de traitement des données 300 mémorise le débit calculé. A l'étape suivante E53, le module de traitement des données 300 vérifie si le débit calculé est non nul.

Dans l'affirmative, le module de traitement des données 300 passe à l'étape E54. Dans la négative, le module de traitement des données 300 passe à l'étape E56.

A l'étape suivante E54, le module de traitement des données 300 met à jour la variable volume soutiré V_soutiré en ajoutant au volume soutiré calculé à la précédente itération le débit calculé multiplié par la périodicité d'exécution de l'algorithme et mémorise la variable volume soutiré V_soutiré mise à jour.

A l'étape suivante E55, le module de traitement des données 300 met la variable Fin soutirage à la valeur non et la variable soutirage en cours à la valeur oui.

Ces opérations effectuées, le module de traitement des données 300 interrompt le présent algorithme.

A l'étape E56, le module de traitement des données 300 vérifie si le débit calculé à la précédente itération est non nul.

Dans l'affirmative, le module de traitement des données 300 passe à l'étape E57. Dans la négative, le module de traitement des données 300 passe à l'étape E58.

A l'étape suivante E57, le module de traitement des données 300 met la variable Fin soutirage à la valeur oui et la variable soutirage en cours à la valeur non et interrompt le présent algorithme.

A l'étape E58, le module de traitement des données 300 met la variable Fin soutirage à la valeur non et la variable soutirage en cours à la valeur non.

Ces opérations effectuées, le module de traitement des données 300 interrompt le présent algorithme.

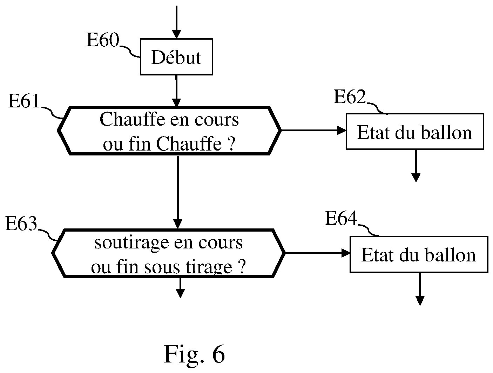

La Fig. 6 illustre un exemple d'un premier algorithme exécuté par le module de détermination de l'état du ballon.

Le présent algorithme est exécuté périodiquement, par exemple avec une périodicité de 30 minutes ou si la variable fin de soutirage est à la valeur oui ou si la variable fin de chauffe est à la valeur oui ou sur demande de l'utilisateur.

A l'étape E60, l'algorithme débute.

A l'étape E61, le module de détermination de l'état du ballon 305 vérifie si la variable Chauffe en cours est à la valeur oui ou dès que la variable Fin de chauffe est à la valeur oui. Dans l'affirmative, le module de détermination de l'état du ballon 305 passe à l'étape E62. Dans la négative, c'est-à-dire qu'il n'y a plus de chauffe, le module de détermination de l'état du ballon 305 passe à l'étape E63.

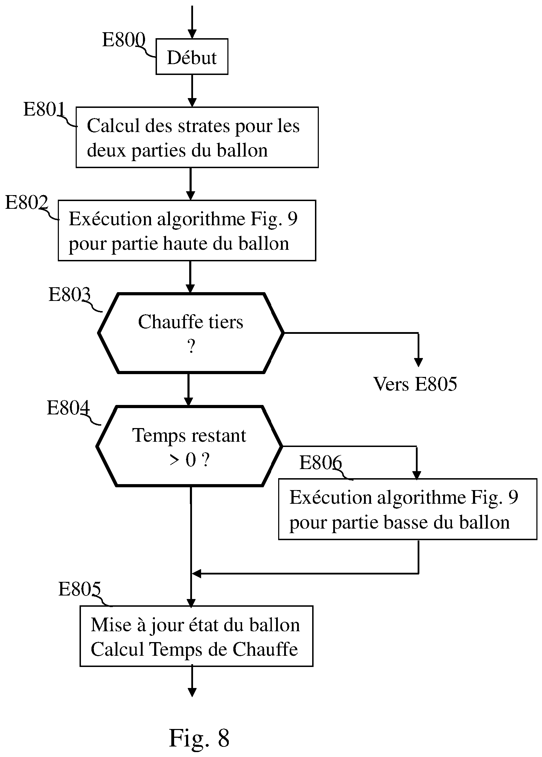

A l'étape E62, le module de détermination de l'état du ballon 305 obtient un état du ballon en exécutant l'algorithme décrit en référence à la Fig. 8. Cette opération effectuée, le module de traitement des données 300 interrompt le présent algorithme.

A l'étape E63, le module de détermination de l'état du ballon 305 vérifie si la variable Soutirage en cours est à la valeur oui et dès que la variable fin de soutirage passe à oui, le module de détermination de l'état du ballon 305 passe à l'étape E64. Dans la négative, le module de détermination de l'état du ballon 305 interrompt le présent algorithme, c'est-à-dire qu'il n'y a ni chauffe ni soutirage.

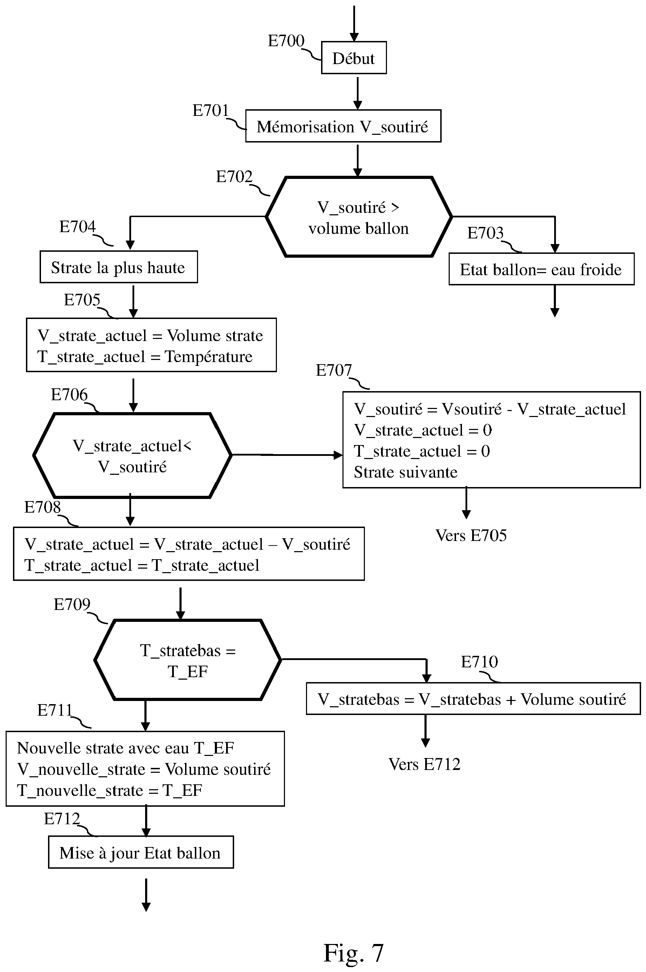

A l'étape E64, le module de détermination de l'état du ballon 305 obtient un état du ballon en exécutant l'algorithme décrit en référence à la Fig. 7. Cette opération effectuée, le module de traitement des données 300 interrompt le présent algorithme.

Fig. 7 illustre un exemple d'un second algorithme exécuté par le module de détermination de l'état du ballon.

A l'étape E700, l'algorithme débute.

A l'étape E701, le module de détermination de l'état du ballon 305 mémorise la valeur de la variable V_soutiré.

A l'étape suivante E702, le module de détermination de l'état du ballon 305 vérifie si la valeur de la variable V_soutiré est supérieure à la variable V_ballon qui représente le volume total du ballon.

Dans l'affirmative, le module de détermination de l'état du ballon 305 passe à l'étape E703. Dans la négative, le module de détermination de l'état du ballon 305 passe à l'étape E704. A l'étape E703, le module de détermination de l'état du ballon 305 met la variable Etat du ballon à la valeur remplie d'eau froide. Cette opération effectuée, le module de traitement des données 300 interrompt le présent algorithme.

A l'étape E704, le module de détermination de l'état du ballon 305 sélectionne la strate la plus haute, c'est-à-dire la valeur de la strate en premier dans le tableau état du ballon de strate formé par le module de détermination de l'état du ballon 305.

A l'étape suivante E705, le module de détermination de l'état du ballon 305 met la variable V_strate_actuel à la valeur du volume de la strate sélectionnée et la variable T_strate_actuel à la valeur de la température de la strate sélectionnée.

A l'étape suivante E706, le module de détermination de l'état du ballon 305 vérifie si la valeur de la variable V_strate_actuel est inférieure à la valeur de la variable V_soutiré. Dans l'affirmative, le module de détermination de l'état du ballon 305 passe à l'étape E707. Dans la négative, le module de détermination de l'état du ballon 305 passe à l'étape E708. A l'étape E707, le module de détermination de l'état du ballon 305 met à jour la valeur de la variable V_soutiré en lui soustrayant la valeur de la variable V_strate_actuel, met la valeur des variables V_strate_actuel et T_strate_actuel à la valeur nulle et sélectionne la strate suivante dans le tableau état du ballon.

Cette opération effectuée, le module de détermination de l'état du ballon 305 retourne à l'étape E705.

A l'étape E708, le module de détermination de l'état du ballon 305 met à jour la valeur de la variable V_strate_actuel en lui soustrayant la valeur de la variable V_soutiré et maintient la valeur de la variable T_strate_actuel à sa précédente valeur.

A l'étape suivante E709, le module de détermination de l'état du ballon 305 vérifie si la valeur de la variable T_strate_bas, qui correspond à la température de la strate la plus basse dans le tableau état du ballon est égale à la température de l'eau froide T_EF.

Dans l'affirmative, le module de détermination de l'état du ballon 305 passe à l'étape E710. Dans la négative, le module de détermination de l'état du ballon 305 passe à l'étape E711. A l'étape E710, le module de détermination de l'état du ballon 305 met à jour la valeur de la variable V_strate_bas en lui ajoutant la valeur de la variable V_soutiré.

Cette opération effectuée, le module de détermination de l'état du ballon 305 passe à l'étape E712.

A l'étape E711, le module de détermination de l'état du ballon 305 crée une nouvelle strate dans le tableau état du ballon, affecte à la variable V_nouvelle_strate la valeur de la variable V_soutiré et affecte à la variable T_nouvelle_strate la valeur de la variable T_EF.

A l'étape suivante E712, le module de détermination de l'état du ballon 305 met à jour le tableau état du ballon.

Cette opération effectuée, le module de détermination de l'état du ballon 305 interrompt le présent algorithme.

Fig. 8 illustre un exemple d'un troisième algorithme exécuté par le module de détermination de l'état du ballon lorsque le ballon comprend deux résistances.

A l'étape E800, l'algorithme débute.

Le présent algorithme est exécuté lorsqu'il y a une fin de chauffe ou lorsqu'on arrive au bout des 30 minutes malgré une chauffe en cours. Elle met à jour les différentes strates avec leurs température et volume correspondants en fonction du temps chauffé.

Il est à noter que cet algorithme peut fournir deux sorties, un état du ballon et un temps de chauffe de manière à déterminer le temps nécessaire pour que le ballon se retrouve à un état voulu par exemple pour chauffer l'eau à 40°C, ou chauffer complètement l'eau du ballon, ou ne chauffer complètement que le tiers du volume du ballon.

A l'étape E801, le module de détermination de l'état du ballon 305 lance le calcul des différentes strates pour les deux parties du ballon comprenant deux résistances. Le résultat de ce calcul génère, à partir du tableau état du ballon, deux tableaux de caractérisation de strates (volume et température) : un premier tableau pour la partie haute du ballon chauffée par une résistance et un second tableau pour la partie basse chauffée par la seconde résistance. Le premier tableau de l'étage 1 sera utilisé à l'étape E802 et le deuxième tableau sera utilisé à l'étape E806.

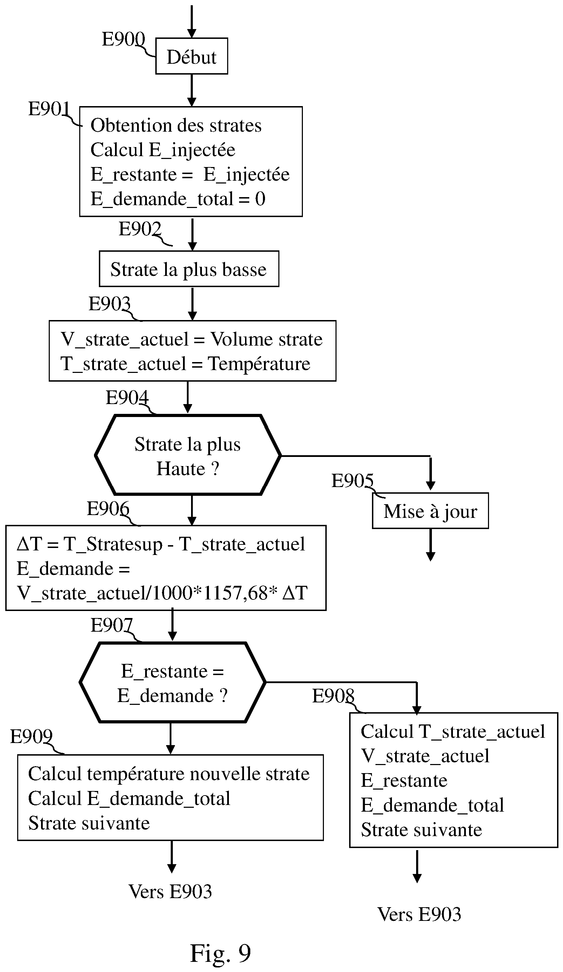

A l'étape E802, le module de détermination de l'état du ballon 305 commande l'exécution, pour la partie haute du ballon, de l'algorithme qui sera décrit en référence à la Fig. 9.

A l'étape E803, le module de détermination de l'état du ballon 305 vérifie si une entrée appelée chauffe tiers est à la valeur oui.

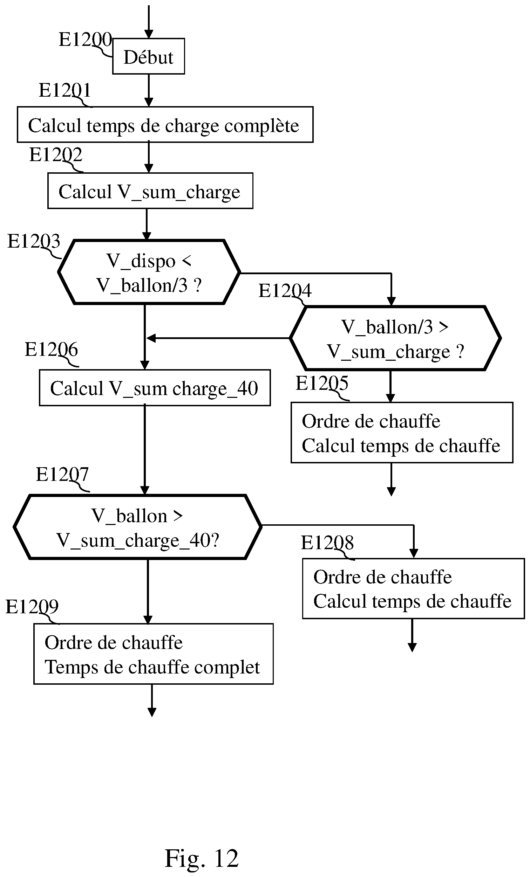

La valeur chauffe tiers est à la valeur oui ou non lorsque l'algorithme est activé par l'algorithme qui sera décrit en référence à la Fig. 12. La valeur chauffe tiers est à la valeur non lorsque l'algorithme est activé par l'algorithme tel que décrit en référence à la Fig. 6. Dans l'affirmative, le module de détermination de l'état du ballon 305 passe à l'étape E805. Dans la négative, le module de détermination de l'état du ballon 305 passe à l'étape E804. A l'étape E804, le module de détermination de l'état du ballon 305 vérifie si la valeur temps chauffé est écoulée.

Dans l'affirmative, le module de détermination de l'état du ballon 305 passe à l'étape E806. Dans la négative, le module de détermination de l'état du ballon 305 passe à l'étape E805.

A l'étape E806, le module de détermination de l'état du ballon 305 commande l'exécution, pour la partie basse du ballon, de l'algorithme qui sera décrit en référence à la Fig. 9. Cette opération effectuée, le module de détermination de l'état du ballon 305 passe à l'étape E805.

A l'étape E805, le module de détermination de l'état du ballon 305 met à jour le tableau état du ballon en regroupant les premier et second tableaux de caractérisation de strates pour former un nouveau tableau état du ballon.

A cette même étape, le module de détermination de l'état du ballon 305 calcule un temps de chauffe en multipliant E_demande_total par 60 et en la divisant par la puissance de la résistance concernée.

La Fig. 9 illustre un exemple d'un quatrième algorithme exécuté par le module de détermination de l'état du ballon.

A l'étape E900, l'algorithme débute. Le présent algorithme met à jour les différentes strates du ballon à la suite d'une commande de chauffe.

Le présent algorithme prend en compte l'énergie électrique qui a été injectée dans le ballon pour en déduire les caractéristiques des strates du ballon.

Il est à noter que cette quantité d'énergie est fournie sous forme d'un temps de chauffe. Cela veut dire également que la chauffe s'est déjà déroulée. En effet, en connaissant la puissance de la résistance, on peut facilement en déduire l'énergie.

Sachant qu'une chauffe se déroule toujours en partant du bas du ballon, on vient vérifier qu'il n'y a pas qu'une seule strate dans le ballon.

Si c'est le cas, on va chercher à trouver la nouvelle température de cette strate en utilisant les formules :

$$\text{Energie injectée (énergie électrique injectée dans le ballon)} = P\,(W) \times T\,(h)$$

E_demande est l'énergie thermique nécessaire pour remonter en température une quantité d'eau par rapport à une différence de température.

$$\text{E\_demande} = \text{Masse} \times Cp * (\text{T\_consigne} - \text{T\_EF})$$

où T_consigne est la température de consigne de chauffe du ballon et Cp est la capacité calorifique de l'eau = 4180 J/ kg°C = 1.16 Wh/kg°C.

$$\text{E\_demande} = \text{Volume} * \text{Masse volumique} * Cp * (\text{T\_consigne} - \text{T\_EF})$$

$$\text{E\_demande (Wh)} = \text{Volume (m3)} * \text{Masse volumique (998kg/m3)} * Cp\,(1.16\ Wh/kg°C) * (\text{T\_consigne} - \text{T\_EF})$$

$$\text{E\_demande (Wh)} = \text{Volume consommé (m3)} \times 1157{,}68\ (Wh/m3\ °C) \times (T°EC - T°EF)$$

Sachant que Energie injectée = E_demande, on peut calculer différentes valeurs comme :

$$\text{T\_nouvelle\_strate} = (\text{Energie injectée} / \text{Volume(m3)} * 1157.68) + \text{T\_EF}.$$

Grâce à ces calculs, on vient mettre à jour l'état du ballon.

En revanche, si on a plusieurs strates, on va chercher à faire remonter la strate la plus basse à la température de la strate juste au-dessus. On compare alors l'énergie disponible (qui au départ vaut l'énergie injectée) avec l'énergie qu'il faudrait pour remonter à la température de la strate juste au-dessus.

Si l'énergie est suffisante, on vient alors fusionner les deux strates. On a donc une strate avec un volume plus grand et une température égale à la température de la strate supérieure. On calcule l'énergie restante, et on reboucle jusqu'à ce que l'énergie restante ne soit plus suffisante.

Si l'énergie n'est pas suffisante alors on vient calculer la nouvelle température de la strate grâce à la même formule qu'au-dessus.

$$\text{T\_nouvelle\_strate} = (\text{Energie injectée} / \text{Volume(m3)} * 1157.68) + \text{T\_EF}.$$

A l'étape E901, le module de détermination de l'état du ballon obtient les données pour la partie haute du ballon lorsque l'exécution de l'algorithme a été lancée par l'étape E802 de l'algorithme de la Fig. 8 ou les données pour la partie basse du ballon lorsque l'exécution de l'algorithme a été lancée par l'étape E806 de l'algorithme de la Fig. 8, calcule l'énergie fournie à la résistance E_injectée, met la valeur de la variable E_restante égale à la valeur de la variable E_injectée et met la variable E_demande_total à la valeur nulle.

A l'étape E902, le module de détermination de l'état du ballon sélectionne la strate la plus basse, c'est-à-dire la valeur de la strate en dernier dans le premier tableau de caractérisation de strates lorsque l'exécution de l'algorithme a été lancée par l'étape E802 ou la strate en dernier dans le second tableau de caractérisation de strates lorsque l'exécution de l'algorithme a été lancée par l'étape E806.

A l'étape suivante E903, le module de détermination de l'état du ballon 305 met la variable V_strate_actuel à la valeur du volume de la strate sélectionnée et la variable T_strate_actuel à la valeur de la température de la strate sélectionnée.

A l'étape suivante E904, le module de détermination de l'état du ballon vérifie si la strate sélectionnée est la plus haute. Dans l'affirmative, le module de détermination de l'état du ballon passe à l'étape E905. Dans la négative, le module de détermination de l'état du ballon passe à l'étape E906.

A l'étape E905, le module de détermination de l'état du ballon 305 calcule les valeurs des variables suivantes :

$$\Delta T = T\_consigne - T\_strate\_actuel$$

où T_strate_actuel est la température de la strate mémorisée dans le tableau état du ballon.

$$E\_demande = V\_strate\_actuel /1000*1157,68* \Delta T$$

$$T\_nouvelle\_strate = (E\_restante/V\_strate\_actuel*1000/1157,68) + T\_strate\_actuel,$$

$$T\_nouvelle\_strate = MIN (T\_EC, T\_nouvelle\_strate)$$

$$E\_restante = Max (0, E\_restante-E\_demande)$$

$$E\_demande\_total = E\_demande\_total + E\_demande.$$

Le module de détermination de l'état du ballon 305 met à jour le tableau état du ballon et met à jour la variable Temps_restant comme égale à E_restante multipliée par 60 (temps en minutes) et divisée par la puissance de la résistance.

Ces opérations effectuées, le module de détermination de l'état du ballon 305 interrompt le présent algorithme.

A l'étape E906, le module de détermination de l'état du ballon 305 calcule les valeurs des variables suivantes :

$$\Delta T= T\_strate\_au\_dessus - T\_strate\_actuel$$

où T_strate_au_dessus est la température de la strate juste au-dessus dans le tableau de caractérisation de strates, T_strate_actuel est la température de la strate mémorisée dans le tableau de caractérisation de strates.

$$E\_demande = V\_strate\_actuel /1000*1157,68* \Delta T$$

A l'étape E907, le module de détermination de l'état du ballon 305 vérifie si la valeur de la variable E_restante est supérieure à la valeur de la variable E_demande.

La variable E_restante est représentative de l'énergie qui reste après avoir remonté une strate à la température de la strate juste au-dessus dans le tableau état de caractérisation de strates. Dans l'affirmative, le module de détermination de l'état du ballon passe à l'étape E908. Dans la négative, le module de détermination de l'état du ballon passe à l'étape E909.

A l'étape E908, le module de détermination de l'état du ballon 305 calcule les valeurs des variables suivantes :

$$T\_strate\_actuel = T\_strate\_au\_dessus$$

V_strate_actuel = V_strate_actuel + V_strate_au_dessus, V_strate_au_dessus est le volume de la strate juste au-dessus dans le tableau de caractérisation de strates.

$$E\_restante = E\_restante - E\_demande,$$

$$E\_demande\_total = E\_demande\ total + E\_demande,$$

Le module de détermination de l'état du ballon 305 sélectionne la strate suivante dans le tableau état du ballon et retourne à l'étape E903.

A l'étape E909, le module de détermination de l'état du ballon 305 calcule les valeurs des variables suivantes :

$$T\_nouvelle\_strate = (E\_restante/V\_strate\_actuel*1000/1157{,}68) + T\_strate\_actuel,$$

$$E\_demande\_total = E\_demande\_total + E\_demande,$$

$$E\_restante = 0.$$

Le module de détermination de l'état du ballon 305 sélectionne la strate suivante dans le tableau état du ballon et retourne à l'étape E903.

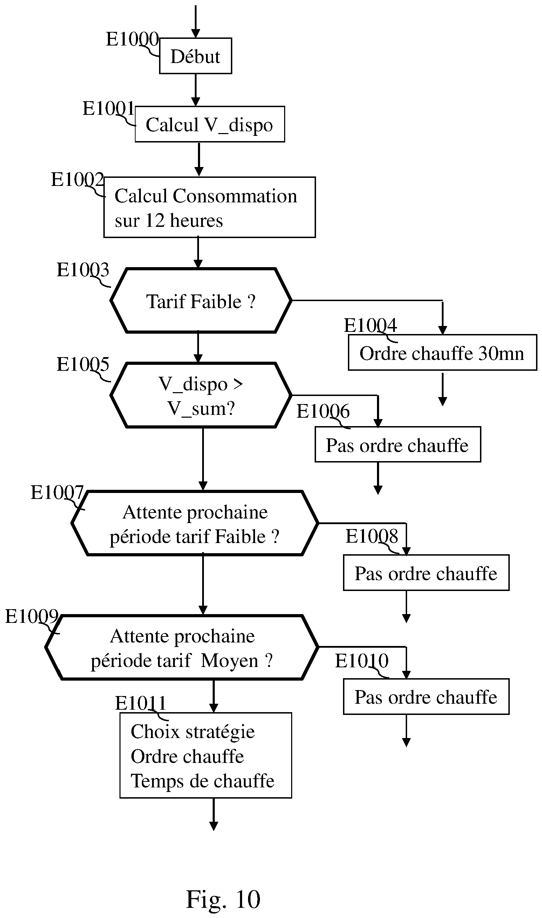

La Fig. 10 illustre un exemple d'un premier algorithme exécuté par le module de relance anticipée.

A l'étape E1000, l'algorithme débute.

Le présent algorithme donne un ordre de chauffe et son temps associé optimisé en fonction de la tarification et de la prédiction de consommation. Il est exécuté toutes les 30 minutes.

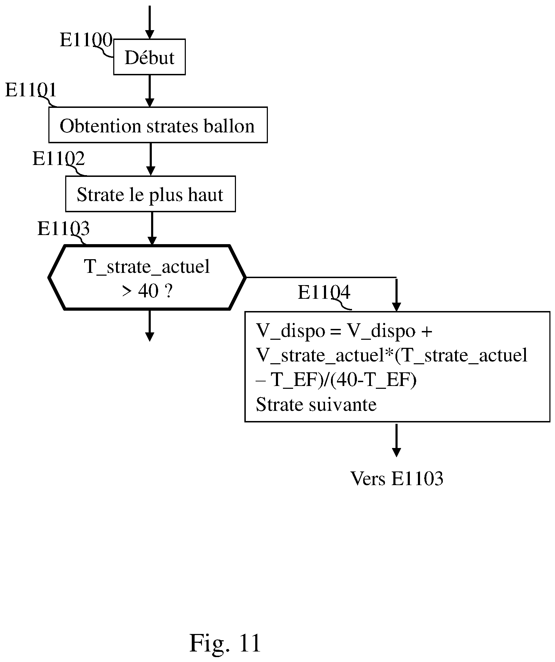

A l'étape E1001, le module de relance anticipée 315 calcule le volume d'eau compris dans le ballon dont la température est supérieure à une température prédéterminée, par exemple 40 degrés. Pour cela, le module de relance anticipée 315 exécute l'algorithme qui sera décrit en référence à la Fig. 11.

A l'étape suivante E1002, le module de relance anticipée 315 obtient du module de prédiction 310 la consommation totale d'eau chaude sur douze heures et met la valeur de la variable V_sum égale à la consommation totale d'eau chaude sur douze heures.

A l'étape suivante E1003, le module de relance anticipée 315 vérifie si l'on est dans une période de tarification de l'énergie électrique la plus économique.

Dans l'affirmative, le module de relance anticipée 315 passe à l'étape E1004 et commande le module de commande 320 pour que celui-ci fournisse de l'énergie électrique à la résistance du ballon pendant une période de 30 mn. Cette opération effectuée, le module de relance anticipée 315 interrompt le présent algorithme.

Dans la négative, le module de relance anticipée 315 passe à l'étape E1005.

A l'étape E1005, le module de relance anticipée 315 vérifie si la valeur de la variable V dispo est supérieure à la consommation totale d'eau chaude sur douze heures.

Dans l'affirmative, le module de relance anticipée 315 passe à l'étape E1006. Dans la négative, le module de relance anticipée 315 passe à l'étape E1007.

A l'étape E1006, le module de relance anticipée 315 commande le module de commande 320 pour que celui-ci ne fournisse par d'énergie électrique à la résistance du ballon. Cette opération effectuée, le module de relance anticipée 315 interrompt le présent algorithme.

A l'étape E1007, le module de relance anticipée 315 vérifie si la valeur de la variable V dispo est supérieure à la consommation totale d'eau chaude pendant la durée restante avant la prochaine période de tarification de l'énergie électrique la plus économique.

Dans l'affirmative, le module de relance anticipée 315 passe à l'étape E1008. Dans la négative, le module de relance anticipée 315 passe à l'étape E1009.

A l'étape E1008, le module de relance anticipée 315 commande le module de commande 320 pour que celui-ci ne fournisse par d'énergie électrique à la résistance du ballon. Cette opération effectuée, le module de relance anticipée 315 interrompt le présent algorithme.

A l'étape E1009, le module de relance anticipée 315 vérifie si la valeur de la variable V dispo est supérieure à la consommation totale d'eau chaude pendant la durée restante avant la prochaine période de tarification de l'énergie électrique moyenne.

Dans l'affirmative, le module de relance anticipée 315 passe à l'étape E1010. Dans la négative, le module de relance anticipée 315 passe à l'étape E1011.

A l'étape E1010, le module de relance anticipée 315 commande le module de commande 320 pour que celui-ci ne fournisse par d'énergie électrique à la résistance du ballon. Cette opération effectuée, le module de relance anticipée 315 interrompt le présent algorithme.

A l'étape E1011, le module de relance anticipée 315 active l'algorithme qui sera décrit en référence à la Fig. 12. Cette opération effectuée, le module de relance anticipée 315 interrompt le présent algorithme.

La Fig. 11 illustre un exemple d'un second algorithme exécuté par le module de relance anticipée.

A l'étape E1100, l'algorithme débute.

Le présent algorithme détermine la quantité d'eau utilisable dans le ballon (c'est-à-dire dont la température est supérieure à 40°C). On récupère donc la composition des strates avec le tableau état du ballon. Tous les volumes avec une température supérieure à 40°C sont additionnés ensemble.

A l'étape E1101, le module de relance anticipée 315 obtient les informations de volume et de température de chaque strate dans le tableau état du ballon et met la variable V_dispo à la valeur nulle.

A l'étape E1 102, le module de relance anticipée 315 sélectionne la strate la plus haute, c'est-à-dire la valeur de la strate en premier dans le tableau état du ballon de strate formé par le module de détermination de l'état du ballon 305.

A l'étape suivante E1103, le module de relance anticipée 315 vérifie si la température de la strate sélectionnée est supérieure à 40 degrés.

Dans l'affirmative, le module de relance anticipée 315 passe à l'étape E1104. Dans la négative, le module de relance anticipée 315 interrompt le présent algorithme.

A l'étape E1104, le module de relance anticipée 315 incrémente la valeur de la variable V_dispo du volume de la strate sélectionnée et sélectionne la strate suivante dans le tableau état du ballon.

Le volume de la strate dont la température est supérieure à 40°C est calculé à un volume équivalent à 40°C avant d'être incrémenté.

$$V\_dispo = V\_dispo + V\_strate\_actuel*(T\_strate\_actuel - T°EF)/(40\text{-}T°EF)$$

Ces opérations effectuées, le module de relance anticipée 315 retourne à l'étape E1103.

La Fig. 12 illustre un exemple d'un troisième algorithme exécuté par le module de relance anticipée.

A l'étape E1200, l'algorithme débute.

Le présent algorithme sélectionne un choix parmi un ensemble de plusieurs possibilités de chauffe, par exemple trois. Soit on chauffe à 60°C, soit on chauffe à 40°C ou alors on se permet de ne chauffer que la partie haute du ballon à 60°C.

Dans un premier temps, on obtient le temps qu'il faut pour remonter le ballon en entier à la température de consigne d'eau chaude en lançant les algorithmes précédemment décrits en référence aux Figs. 8 et 9.

Ensuite, on calcule la somme des consommations entre maintenant et le temps de charge complète en fonction des valeurs fournies par le module de prédiction 320. Le choix de la stratégie de chauffe qui sera adopté dépend du volume qui sera consommé. En effet, l'objectif est de chauffer un minimum possible en attendant une période tarifaire plus favorable. Et la raison pour décider par rapport au temps nécessaire de chauffer complètement est d'avoir suffisamment de temps pour réagir à une future consommation importante, par exemple une douche ou un bain.

Donc si un tiers du ballon permet de satisfaire la demande, on va chauffer le temps nécessaire pour chauffer seulement le tiers du ballon.

Si ce n'est pas le cas, le volume d'un ballon à 40°C est analysé pour savoir s'il peut répondre à la future demande. Si oui, un ordre de chauffe et un temps de chauffe sont calculés. Dans le cas contraire, le ballon est obligé de chauffer à la consigne normale.

A l'étape E1201, le module de relance anticipée 315 calcule le temps de chauffe complète de l'eau du ballon et active les algorithmes qui sont décrits en référence aux Figs. 8 et 9. A l'étape suivante E1202, le module de relance anticipée 315 calcule la consommation totale V_sum_charge prédite par le module de prédiction jusqu'à la chauffe complète du ballon en eau à la température de consigne.

A l'étape suivante E1203, le module de relance anticipée 315 vérifie si la valeur de la variable V_dispo est inférieure au volume total du ballon divisé par trois.

Dans l'affirmative, le module de relance anticipée 315 passe à l'étape E1204. Dans la négative, le module de relance anticipée 315 passe à l'étape E1206.

A l'étape E1204, le module de relance anticipée 315 vérifie si le volume total du ballon divisé par trois est supérieur à la valeur de la variable V_sum charge.

Dans l'affirmative, le module de relance anticipée 315 passe à l'étape E1205. Dans la négative, le module de relance anticipée 315 passe à l'étape E1206.

A l'étape E1205, le module de relance anticipée 315 calcule le temps de chauffe du ballon pour chauffer le tiers de l'eau comprise dans le ballon à la température de consigne et met la variable ordre de chauffe à la valeur vrai.

Cette opération effectuée, le module de relance anticipée 315 interrompt le présent algorithme.

A l'étape E1206, le module de relance anticipée 315 calcule l'équivalent du volume d'eau à 40°C à partir du volume V_sum_charge :

$$\text{V\_sum\_charge pour 40 degrés} = \text{V\_sum\_charge} * (\text{T\_consigne} - \text{T\_EF})/(40\text{-T\_EF}).$$

A l'étape E1207, le module de relance anticipée 315 vérifie si le volume total du ballon est supérieur à la valeur de la variable V_sum_charge pour 40 degrés.

Dans l'affirmative, le module de relance anticipée 315 passe à l'étape E1208. Dans la négative, le module de relance anticipée 315 passe à l'étape E1209.

A l'étape E1208, le module de relance anticipée 315 calcule le temps de chauffe du ballon pour chauffer le ballon à la température de 40 degrés et met la variable ordre de chauffe à la valeur vrai.

Cette opération effectuée, le module de relance anticipée 315 interrompt le présent algorithme.

A l'étape E1209, le module de relance anticipée 315 met la variable ordre de chauffe à la valeur vrai et la variable temps de chauffe à la valeur complète.

Cette opération effectuée, le module de relance anticipée 315 interrompt le présent algorithme.

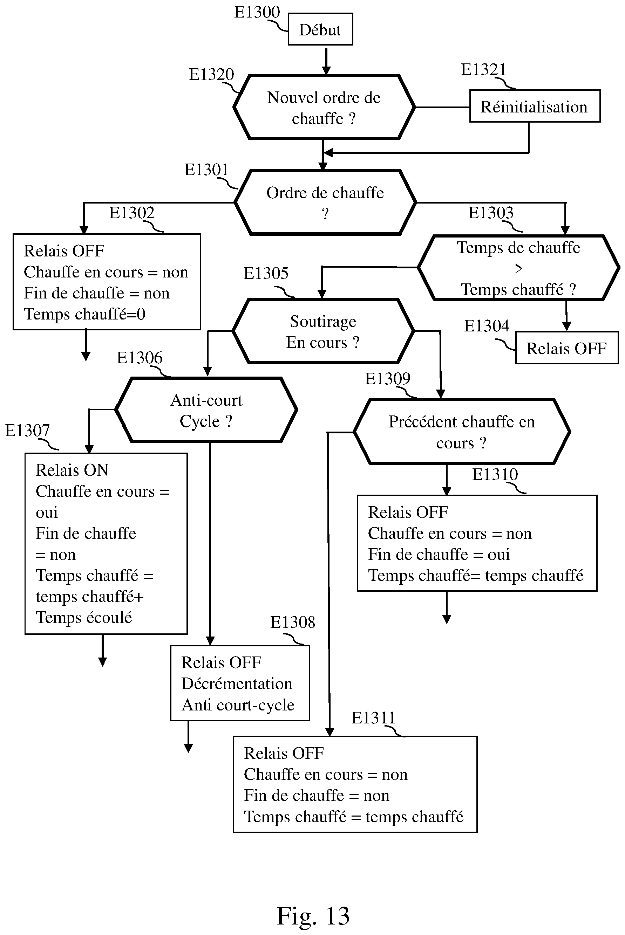

La Fig. 13 illustre un exemple d'un algorithme exécuté par le module de commande.

A l'étape E1300, l'algorithme débute.

Le présent algorithme est exécuté toutes les minutes ou à chaque changement d'état des variables : ordre de chauffe (oui/non), temps de chauffe (minutes) ou soutirage en cours (oui/non).

A l'étape E1320, le module de commande 320 vérifie si un nouvel ordre de chauffe est reçu. Dans la négative, le module de commande 320 passe à l'étape E1301.

Dans l'affirmative, le module de commande 320 passe à l'étape E1321 et réinitialise la variable temps chauffé à la valeur nulle.

Cette opération effectuée, le module de commande 320 passe à l'étape E1301.

A l'étape E1301, le module de commande 320 vérifie si la variable ordre de chauffe est à la valeur Vrai.

Dans l'affirmative, le module de commande 320 passe à l'étape E1303. Dans la négative, le module de commande 320 passe à l'étape E1302.

A l'étape E1302, le module de commande 320 commande l'ouverture du relais fournissant l'énergie électrique à la ou aux résistances du ballon, met les variables Chauffe en cours et Fin de chauffe à la valeur non et la variable temps chauffé à la valeur nulle.

Cette opération effectuée, le module de commande 320 interrompt le présent algorithme.

A l'étape E1303, le module de commande 320 vérifie si la valeur temps de chauffe est supérieure au temps depuis lequel l'énergie électrique est fournie à la ou aux résistances du ballon.

Dans l'affirmative, le module de commande 320 passe à l'étape E1304. Dans la négative, le module de commande 320 passe à l'étape E1305.

A l'étape E1304, le module de commande 320 commande l'ouverture du relais fournissant l'énergie électrique à la ou aux résistances du ballon.

Cette opération effectuée, le module de commande 320 interrompt le présent algorithme. A l'étape E1305, le module de commande 320 vérifie si la variable soutirage en cours est à la valeur vrai.

Dans l'affirmative, le module de commande 320 passe à l'étape E1309. Dans la négative, le module de commande 320 passe à l'étape E1306.

A l'étape E1309, le module de commande 320 vérifie si lors de la précédente exécution de l'algorithme la variable chauffe en cours était égale à la valeur oui.

Dans l'affirmative, le module de commande 320 passe à l'étape E1310. Dans la négative, le module de commande 320 passe à l'étape E1311.

A l'étape E1310, le module de commande 320 commande l'ouverture du relais fournissant l'énergie électrique à la ou aux résistances du ballon, met la variable Chauffe en cours à la valeur non, la variable fin de chauffe à la valeur oui et la variable temps chauffé à la valeur temps chauffé.

Cette opération effectuée, le module de commande 320 interrompt le présent algorithme.

A l'étape E1311, le module de commande 320 commande l'ouverture du relais fournissant l'énergie électrique à la ou aux résistances du ballon, met la variable Chauffe en cours à la valeur non, la variable fin de chauffe à la valeur non et la variable temps chauffé à la valeur temps chauffé.

Cette opération effectuée, le module de commande 320 interrompt le présent algorithme. A l'étape E1306, le module de commande 320 vérifie si la valeur de la variable anti court-cycle est nulle. La variable anti court-cycle est un temps qui permet de limiter les commutations de relais.

Dans l'affirmative, le module de commande 320 passe à l'étape E1307. Dans la négative, le module de commande 320 passe à l'étape E1308.

A l'étape E1308, le module de commande 320 commande l'ouverture du relais fournissant l'énergie électrique à la ou aux résistances du ballon, décrémente la variable anti court-cycle et interrompt le présent algorithme.

A l'étape E1307, le module de commande 320 commande la fermeture du relais fournissant l'énergie électrique à la ou aux résistances du ballon, met la variable Chauffe en cours à la valeur oui, la variable fin de chauffe à la valeur non et la variable temps chauffé à la valeur temps chauffé plus temps écoulé.

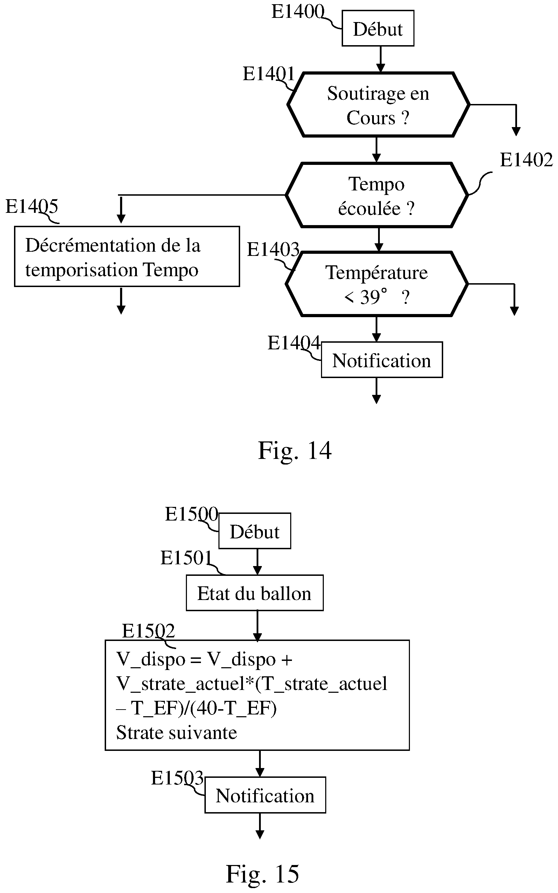

Cette opération effectuée, le module de commande 320 interrompt le présent algorithme. La Fig. 14 illustre un exemple d'un premier algorithme exécuté par le module alerte et affichage.

L'algorithme de la Fig. 14 a pour fonction de prévenir un utilisateur qu'il y a un risque d'arrivée d'eau froide. Pour cela, l'algorithme a besoin d'avoir en entrée des valeurs de la température de l'eau soutirée et si un soutirage est en cours.

A l'étape E 1400, l'algorithme débute.

Le présent algorithme est exécuté périodiquement, par exemple avec une périodicité de 1 seconde.

A l'étape E1401, le module alerte et affichage 325 vérifie si la variable soutirage en cours est à la valeur oui.

Dans l'affirmative, le module alerte et affichage 325 passe à l'étape E1402 et initialise une temporisation tempo à une valeur comprise entre 30 et 90 secondes. Dans la négative, le module alerte et affichage 325 interrompt le présent algorithme.

A l'étape E1402, le module alerte et affichage 325 vérifie si la temporisation tempo est écoulée.

Dans la négative, le module alerte et affichage 325 passe à l'étape E1405.

Dans l'affirmative, le module alerte et affichage 325 passe à l'étape E1403.

A l'étape E1405, le module alerte et affichage 325 décrémente la valeur de la temporisation Tempo.

Cette opération effectuée, le module alerte et affichage 325 interrompt le présent algorithme. A l'étape E1403, le module alerte et affichage 325 vérifie si la température de l'eau en sortie du ballon est inférieure à 39 degrés.

Dans l'affirmative, le module alerte et affichage 325 passe à l'étape E1404. Dans la négative, le module alerte et affichage 325 interrompt le présent algorithme.

A l'étape E1404, le module alerte et affichage 325 commande le transfert d'un message à destination de l'interface homme machine 50 notifiant que la température de l'eau à la sortie du ballon est inférieure à 39 degrés.

Cette opération effectuée, le module alerte et affichage 325 interrompt le présent algorithme. La Fig .15 illustre un exemple d'un algorithme exécuté par le module alerte et affichage alerte et affichage.

Le présent algorithme est exécuté à la réception d'une requête émise par l'interface homme machine 50.

A l'étape E1500, l'algorithme débute.

A l'étape E1501, le module alerte et affichage 325 obtient le tableau état du ballon en exécutant l'algorithme décrit en référence à la Fig. 6.

A l'étape suivante E1502, le module alerte et affichage 325 obtient la composition des strates avec le tableau état du ballon. Tous les volumes avec une température supérieure à 40°C sont additionnés ensemble comme cela a été décrit en référence à la Fig. 11.

A l'étape E1503, le module alerte et affichage 325 commande le transfert d'un message à destination de l'interface homme machine 50 indiquant le volume d'eau supérieure à 40 degrés disponible dans le ballon.

Cette opération effectuée, le module alerte et affichage 325 interrompt le présent algorithme.

## Revendications

1. Dispositif de gestion, dans un ballon (20), d'un volume d'eau dont la température est supérieure à une température prédéterminée, l'eau dans le ballon étant chauffée périodiquement dans une plage horaire prédéterminée par au moins une résistance pour arriver à une température de consigne, à chaque soutirage de l'eau du ballon, la même quantité d'eau étant introduite dans le ballon que celle soutirée, la quantité d'eau introduite étant à une température dite basse, le volume d'eau introduit dans le ballon à chaque soutirage d'eau du ballon formant une strate d'eau à la température basse et ne se mélangeant pas avec au moins une autre strate d'eau du ballon dont la température est différente, **caractérisé en ce que** le dispositif comporte :

   - des moyens (10, 25) de détermination du débit et d'une température de l'eau en sortie du ballon lorsque de l'eau est soutirée du ballon,
- des moyens (10) de détermination du volume d'eau soutiré à la fin du soutirage de l'eau,
- des moyens (10) de mise à jour du volume d'eau compris dans au moins une strate du ballon à partir du volume d'eau soutiré, la mise à jour de la au moins une strate étant effectuée :

- en sélectionnant la strate la plus haute d'un tableau état du ballon comprenant les volumes et les températures de chaque strate,
- en soustrayant au volume de la strate sélectionnée le volume d'eau soutiré si le volume de la strate sélectionnée est supérieur ou égal au volume d'eau soutiré,
- en soustrayant, si le volume de la strate sélectionnée est inférieur au volume d'eau soutiré, au volume d'eau soutiré le volume de la strate sélectionnée et en sélectionnant la strate suivante du tableau état de ballon et en réitérant la soustraction pour la strate suivante sélectionnée ;
- en créant une nouvelle strate si la température de la strate ayant la température la plus basse parmi les températures des strates du ballon est supérieure à la température de l'eau froide, l'eau froide étant l'eau qui entre dans le ballon,
- en ajoutant le volume d'eau soutiré au volume de la strate ayant la température la plus basse si la température de la strate ayant la température la plus basse parmi les températures des strates du ballon est égale à la température basse,
- des moyens (10) de mise à jour, lorsque l'eau du ballon est chauffée, des strates du tableau état du ballon en prenant en compte l'énergie électrique qui a été injectée dans le ballon,
- des moyens (10) de détermination du volume d'eau dans le ballon dont la température est supérieure ou égale à une température prédéterminée, la détermination du volume d'eau dans le ballon dont la température est supérieure ou égale à la température prédéterminée étant effectuée en additionnant tous les volumes des strates du tableau état du ballon dont la température est supérieure à la température prédéterminée,
- des moyens (10) de commande du chauffage d'au moins une partie de l'eau du ballon en dehors de la plage horaire prédéterminée si le volume d'eau dans le ballon, dont la température est supérieure ou égale à une température d'eau prédéterminée, est inférieur à un seuil.

2. Dispositif selon la revendication 1, **caractérisé en ce que** les moyens de détermination du débit de l'eau en sortie du ballon sont externes au ballon.

3. Dispositif selon l'une quelconque des revendications précédentes, **caractérisé en ce que** le seuil est déterminé à partir d'une prédiction journalière du volume d'eau soutiré du ballon.

4. Dispositif selon l'une quelconque des revendications précédentes, **caractérisé en ce que** le dispositif comporte en outre des moyens de détermination de la température de consigne qui mesurent la température de l'eau soutirée lors d'un premier soutirage d'eau consécutif à un chauffage de l'eau dans la plage horaire.

5. Dispositif selon l'une quelconque des revendications précédentes, **caractérisé en ce que** le dispositif comporte en outre des moyens de détermination de la puissance électrique délivrée à la au moins une résistance dans la plage horaire.

6. Dispositif selon l'une quelconque des revendications précédentes, **caractérisé en ce que** les moyens de commande du chauffage d'au moins une partie de l'eau du ballon en dehors de la plage horaire prédéterminée déterminent en outre la quantité d'eau à chauffer en fonction d'une tarification de l'énergie électrique délivrée à la au moins une résistance.

7. Dispositif selon l'une quelconque des revendications précédentes, **caractérisé en ce que** le dispositif comporte en outre des moyens de notification que le volume d'eau dans le ballon, dont la température est supérieure ou égale à la température d'eau prédéterminée, est inférieur au seuil.

8. Dispositif selon l'une quelconque des revendications précédentes, **caractérisé en ce que** le dispositif comporte en outre des moyens de notification du volume d'eau dans le ballon dont la température est supérieure ou égale à la température d'eau prédéterminée.

9. Procédé de gestion, dans un ballon, d'un volume d'eau dont la température est supérieure à une température prédéterminée, l'eau dans le ballon étant chauffée périodiquement dans une plage horaire prédéterminée par au moins une résistance pour arriver à une température de consigne, à chaque soutirage de l'eau du ballon, la même quantité d'eau que celle soutirée étant introduite dans le ballon, la quantité d'eau introduite étant à une température dite basse, le volume d'eau introduit dans le ballon à chaque soutirage d'eau du ballon formant une strate d'eau à la température basse et ne se mélangeant pas avec au moins une autre strate d'eau du ballon dont la température est différente, **caractérisé en ce que** le procédé comporte les étapes de :

- détermination du débit et d'une température de l'eau en sortie du ballon lorsque de l'eau est soutirée du ballon,
- détermination du volume d'eau soutiré à la fin du soutirage de l'eau,
- mise à jour du volume d'eau compris dans au moins une strate du ballon à partir du volume d'eau soutiré, la mise à jour de la au moins une strate étant effectuée :

- en sélectionnant la strate la plus haute d'un tableau état du ballon comprenant les volumes et les températures de chaque strate,
- en soustrayant au volume de la strate sélectionnée le volume d'eau soutiré si le volume de la strate sélectionné est supérieur au volume d'eau soutiré,
- en soustrayant si le volume de la strate sélectionné est inférieur au volume d'eau soutiré le volume de la strate sélectionnée, en sélectionnant la strate suivante du tableau état de ballon et en réitérant l'étape de soustraction,
- en créant une nouvelle strate si la température de la strate ayant la température la plus basse parmi les températures des strates du ballon est supérieure à la température basse,
- en ajoutant le volume d'eau soutiré au volume de la strate ayant la température la plus basse si la température de la strate ayant la température la plus basse parmi les températures des strates du ballon est égale à la température basse,
- mise à jour, lorsque l'eau du ballon est chauffée, des strates du tableau état du ballon, en prenant en compte l'énergie électrique qui a été injectée dans le ballon
- détermination du volume d'eau dans le ballon dont la température est supérieure ou égale à une température prédéterminée, la détermination du volume d'eau dans le ballon dont la température est supérieure ou égale à la température prédéterminée étant effectué en additionnant tous les volumes des strates du tableau état du ballon dont la température est supérieure à la température prédéterminée,
- commande du chauffage d'au moins une partie de l'eau du ballon en dehors de la plage horaire prédéterminée si le volume d'eau dans le ballon, dont la température est supérieure ou égale à une température d'eau prédéterminée, est inférieur à un seuil.

**10.** Procédé selon la revendication 9, **caractérisé en ce que** le procédé utilise, lors de l'exécution des étapes de détermination et de mise à jour, des variables qui sont réinitialisées à la fin de chaque plage horaire prédéterminée.

**11.** Programme d'ordinateur, **caractérisé en ce qu'**il comprend des instructions pour mettre en oeuvre, par un dispositif et de gestion de la quantité d'eau présente dans un ballon, le procédé selon l'une des revendications 9 à 10, lorsque ledit programme est exécuté par un le dispositif.

**12.** Un support d'enregistrement sur lequel est stocké un programme d'ordinateur comprenant des instructions pour mettre en oeuvre, par un dispositif et de gestion de la quantité d'eau présente dans un ballon, le procédé selon l'une des revendications 9 à 10, lorsque ledit programme est exécuté par le dispositif.

**Patentansprüche**

**1.** Steuerungsvorrichtung für ein Wasservolumen in einem Speicher (20), dessen Temperatur höher ist als eine vorgegebene Temperatur, wobei das Wasser im Speicher periodisch innerhalb eines vorgegebenen Zeitbereichs durch mindestens einen Widerstand erwärmt wird, um eine Solltemperatur zu erreichen, wobei bei jeder Entnahme des Wassers aus dem Speicher die gleiche Wassermenge in den Speicher eingeführt wird wie die entnommene, wobei die eingeführte Wassermenge eine sogenannte niedrige Temperatur hat, wobei das bei jeder Entnahme von Wasser aus dem Speicher in den Speicher eingeführte Wasservolumen eine Wasserschicht mit der niedrigen Temperatur bildet und sich nicht mit mindestens einer anderen Wasserschicht des Speichers, deren Temperatur unterschiedlich ist, vermischt, **dadurch gekennzeichnet, dass** die Vorrichtung Folgendes aufweist:

- Mittel (10, 25) zum Bestimmen der Durchflussmenge und einer Temperatur des Wassers am Auslass des Speichers, wenn Wasser aus dem Speicher entnommen wird,
- Mittel (10) zum Bestimmen des entnommenen Wasservolumens am Ende der Wasserentnahme,

- Mittel (10) zum Aktualisieren des Wasservolumens, das in mindestens einer Schicht des Speichers enthalten ist, ausgehend von dem entnommenen Wasservolumen, wobei das Aktualisieren der mindestens einen Schicht durchgeführt wird:

    - durch Auswählen der obersten Schicht einer Speicherzustandstabelle, die die Volumina und Temperaturen jeder Schicht enthält,
    - durch Subtrahieren des Volumens des entnommenen Wassers vom Volumen der ausgewählten Schicht, wenn das Volumen der ausgewählten Schicht größer oder gleich dem Volumen des entnommenen Wassers ist,
    - wenn das Volumen der ausgewählten Schicht kleiner ist als das Volumen des entnommenen Wassers, durch Subtrahieren des Volumens der ausgewählten Schicht von dem Volumen des entnommenen Wassers und Auswählen der nächsten Schicht aus der Speicherzustandstabelle und Wiederholen der Subtraktion für die nächste ausgewählte Schicht;
    - durch Erzeugen einer neuen Schicht, wenn die Temperatur der Schicht mit der niedrigsten Temperatur unter den Temperaturen der Schichten im Speicher höher ist als die Temperatur des kalten Wassers, wobei kaltes Wasser das Wasser ist, das in den Speicher eintritt,
    - durch Hinzufügen des Volumens des entnommenen Wassers zum Volumen der Schicht mit der niedrigsten Temperatur, wenn die Temperatur der Schicht mit der niedrigsten Temperatur unter den Temperaturen der Schichten im Speicher gleich der niedrigen Temperatur ist,
    - wenn das Wasser im Speicher erwärmt wird, durch Mittel (10) zum Aktualisieren der Schichten der Speicherzustandstabelle unter Berücksichtigung der elektrischen Energie, die in den Speicher eingespeist wurde,
    - durch Mittel (10) zum Bestimmen des Wasservolumens in dem Speicher, dessen Temperatur größer oder gleich einer vorgegebenen Temperatur ist, wobei das Bestimmen des Wasservolumens in dem Speicher, dessen Temperatur größer oder gleich der vorgegebenen Temperatur ist, durch Addieren aller Volumina der Schichten der Speicherzustandstabelle, deren Temperatur größer als die vorgegebene Temperatur ist, durchgeführt wird,
    - durch Mittel (10) zum Steuern des Erwärmens mindestens eines Teils des Wassers im Speicher außerhalb des vorgegebenen Zeitbereichs, wenn das Wasservolumen im Speicher, dessen Temperatur größer oder gleich einer vorgegebenen Wassertemperatur ist, unter einem Schwellenwert liegt.

2. Vorrichtung nach Anspruch 1, **dadurch gekennzeichnet, dass** die Mittel zum Bestimmen der Durchflussmenge des Wassers am Auslass des Speichers außerhalb des Speichers liegen.

3. Vorrichtung nach einem der vorhergehenden Ansprüche, **dadurch gekennzeichnet, dass** der Schwellenwert anhand einer täglichen Vorhersage des aus dem Speicher entnommenen Wasservolumens bestimmt wird.

4. Vorrichtung nach einem der vorhergehenden Ansprüche, **dadurch gekennzeichnet, dass** die Vorrichtung darüber hinaus Mittel zum Bestimmen der Solltemperatur aufweist, die die Temperatur des Wassers messen, das bei einer ersten Wasserentnahme im Anschluss an eine Wassererwärmung innerhalb des Zeitbereichs entnommen wird.

5. Vorrichtung nach einem der vorhergehenden Ansprüche, **dadurch gekennzeichnet, dass** die Vorrichtung darüber hinaus Mittel zum Bestimmen der elektrischen Leistung aufweist, die an den mindestens einen Widerstand innerhalb des Zeitbereichs abgegeben wird.

6. Vorrichtung nach einem der vorhergehenden Ansprüche, **dadurch gekennzeichnet, dass** die Mittel zum Steuern des Erwärmens mindestens eines Teils des Wassers im Speicher außerhalb des vorgegebenen Zeitbereichs darüber hinaus die Menge des zu erwärmenden Wassers in Abhängigkeit von einer Preisgestaltung der elektrischen Energie, die an den mindestens einen Widerstand abgegeben wird, bestimmen.

7. Vorrichtung nach einem der vorhergehenden Ansprüche, **dadurch gekennzeichnet, dass** die Vorrichtung darüber hinaus Mittel zum Melden aufweist, dass das Wasservolumen im Speicher, dessen Temperatur gleich oder höher als die vorgegebene Wassertemperatur ist, unter dem Schwellenwert liegt.

8. Vorrichtung nach einem der vorhergehenden Ansprüche, **dadurch gekennzeichnet, dass** die Vorrichtung darüber hinaus Mittel zum Melden des Wasservolumens im Speicher aufweist, dessen Temperatur gleich oder höher als die vorgegebene Wassertemperatur ist.

**9.** Verfahren zum Steuern eines Wasservolumens in einem Speicher, dessen Temperatur höher ist als eine vorgegebene Temperatur, wobei das Wasser im Speicher periodisch innerhalb eines vorgegebenen Zeitbereichs durch mindestens einen Widerstand erwärmt wird, um eine Solltemperatur zu erreichen, wobei bei jeder Entnahme des Wassers aus dem Speicher die gleiche Wassermenge wie die entnommene in den Speicher eingeführt wird, wobei die eingeführte Wassermenge eine sogenannte niedrige Temperatur hat, wobei das bei jeder Entnahme von Wasser aus dem Speicher in den Speicher eingeführte Wasservolumen eine Wasserschicht mit der niedrigen Temperatur bildet und sich nicht mit mindestens einer anderen Wasserschicht des Speichers, deren Temperatur unterschiedlich ist, vermischt, **dadurch gekennzeichnet, dass** das Verfahren die folgenden Schritte aufweist:

- Bestimmen der Durchflussmenge und einer Temperatur des Wassers am Auslass des Speichers, wenn Wasser aus dem Speicher entnommen wird,
- Bestimmen des entnommenen Wasservolumens am Ende der Wasserentnahme,
- Aktualisieren des Wasservolumens, das in mindestens einer Schicht des Speichers enthalten ist, ausgehend von dem entnommenen Wasservolumen, wobei das Aktualisieren der mindestens einen Schicht durchgeführt wird:

- durch Auswählen der obersten Schicht einer Speicherzustandstabelle, die die Volumina und Temperaturen jeder Schicht enthält,
- durch Subtrahieren des Volumens des entnommenen Wassers vom Volumen der ausgewählten Schicht, wenn das Volumen der ausgewählten Schicht größer dem Volumen des entnommenen Wassers ist,
- wenn das Volumen der ausgewählten Schicht kleiner ist als das Volumen des entnommenen Wassers, durch Subtrahieren des Volumens der ausgewählten Schicht und Auswählen der nächsten Schicht aus der Speicherzustandstabelle und Wiederholen des Schritts des Subtrahierens,
- durch Erzeugen einer neuen Schicht, wenn die Temperatur der Schicht mit der niedrigsten Temperatur unter den Temperaturen der Schichten im Speicher höher ist als die niedrige Temperatur,
- durch Hinzufügen des Volumens des entnommenen Wassers zum Volumen der Schicht mit der niedrigsten Temperatur, wenn die Temperatur der Schicht mit der niedrigsten Temperatur unter den Temperaturen der Schichten im Speicher gleich der niedrigen Temperatur ist,
- wenn das Wasser im Speicher erwärmt wird, Aktualisieren der Schichten der Speicherzustandstabelle unter Berücksichtigung der elektrischen Energie, die in den Speicher eingespeist wurde,
- Bestimmen des Wasservolumens in dem Speicher, dessen Temperatur größer oder gleich einer vorgegebenen Temperatur ist, wobei das Bestimmen des Wasservolumens in dem Speicher, dessen Temperatur größer oder gleich der vorgegebenen Temperatur ist, durch Addieren aller Volumina der Schichten der Speicherzustandstabelle, deren Temperatur größer als die vorgegebene Temperatur ist, durchgeführt wird,
- Steuern des Erwärmens mindestens eines Teils des Wassers im Speicher außerhalb des vorgegebenen Zeitbereichs, wenn das Wasservolumen im Speicher, dessen Temperatur größer oder gleich einer vorgegebenen Wassertemperatur ist, unter einem Schwellenwert liegt.

**10.** Verfahren nach Anspruch 9, **dadurch gekennzeichnet, dass** das Verfahren bei der Durchführung der Schritte des Bestimmens und Aktualisierens Variablen verwendet, die am Ende jedes vorgegebenen Zeitbereichs zurückgesetzt werden.

**11.** Computerprogramm, **dadurch gekennzeichnet, dass** es Anweisungen aufweist, um durch eine Vorrichtung zum Steuern der in einem Speicher vorhandenen Wassermenge das Verfahren nach einem der Ansprüche 9 bis 10 durchzuführen, wenn das Programm durch die Vorrichtung ausgeführt wird.

**12.** Ein Aufzeichnungsmedium, auf dem ein Computerprogramm gespeichert ist, das Anweisungen aufweist, um durch eine Vorrichtung zum Steuern der in einem Speicher vorhandenen Wassermenge das Verfahren nach einem der Ansprüche 9 bis 10 durchzuführen, wenn das Programm durch die Vorrichtung ausgeführt wird.

**Claims**

**1.** Device for managing, in a tank (20), a volume of water of which the temperature is higher than a predetermined temperature, the water in the tank being heated periodically in a predetermined time range by at least one resistor so as to arrive at a setpoint temperature, each time water is withdrawn from the tank, the same quantity of water being introduced into the tank as that withdrawn, the quantity of water introduced being at a temperature referred to as low, the volume of water introduced into the tank each time water is withdrawn from the tank forming a stratum of water at the low temperature and not mixing with at least one other stratum of water in the tank of which the temperature is different, **characterized in that** the device has:

- means (10, 25) for determining the flow rate and a temperature of the water at the outlet of the tank when water is withdrawn from the tank,
- means (10) for determining the volume of water withdrawn at the end of the withdrawal of the water,
- means (10) for updating the volume of water contained in at least one stratum of the tank on the basis of the volume of water withdrawn, the updating of the at least one stratum being effected:

  - by selecting the highest stratum of a status table of the tank comprising the volumes and the temperatures of each stratum,
  - by subtracting, from the volume of the selected stratum, the volume of water withdrawn if the volume of the selected stratum is greater than or equal to the volume of water withdrawn,
  - by subtracting, if the volume of the selected stratum is less than the volume of water withdrawn, from the volume of water withdrawn, the volume of the selected stratum and by selecting the next stratum of the tank status table and by reiterating the subtraction for the selected next stratum;
  - by creating a new stratum if the temperature of the stratum having the lowest temperature among the temperatures of the strata of the tank is greater than the temperature of the cold water, the cold water being the water that enters the tank,
  - by adding the volume of water withdrawn to the volume of the stratum having the lowest temperature if the temperature of the stratum having the lowest temperature among the temperatures of the strata of the tank is equal to the low temperature,
  - means (10) for updating, when the water in the tank is heated, strata of the status table of the tank by taking into account the electrical energy that has been injected into the tank,
  - means (10) for determining the volume of water in the tank of which the temperature is higher than or equal to a predetermined temperature, the determination of the volume of water in the tank of which the temperature is higher than or equal to the predetermined temperature being effected by adding all the volumes of the strata of the status table of the tank of which the temperature is higher than the predetermined temperature,
  - means (10) for commanding the heating of at least some of the water in the tank outside the predetermined time range if the volume of water in the tank, of which the temperature is higher than or equal to a predetermined water temperature, is below a threshold.

2. Device according to Claim 1, **characterized in that** the means for determining the flow rate of the water at the outlet of the tank are external to the tank.

3. Device according to either one of the preceding claims, **characterized in that** the threshold is determined on the basis of a daily prediction of the volume of water withdrawn from the tank.

4. Device according to any one of the preceding claims, **characterized in that** the device also has means for determining the setpoint temperature that measure the temperature of the water withdrawn during a first water withdrawal following heating of the water in the time range.

5. Device according to any one of the preceding claims, **characterized in that** the device also has means for determining the electrical power delivered to the at least one resistor in the time range.

6. Device according to any one of the preceding claims, **characterized in that** the means for commanding the heating of at least some of the water in the tank outside the predetermined time range also determine the quantity of water to be heated as a function of pricing of the electrical energy delivered to the at least one resistor.

7. Device according to any one of the preceding claims, **characterized in that** the device also has means for notifying that the volume of water in the tank, of which the temperature is higher than or equal to the predetermined water temperature, is below the threshold.

8. Device according to any one of the preceding claims, **characterized in that** the device also has means for notifying the volume of water in the tank of which the temperature is higher than or equal to the predetermined water temperature.

9.  Method for managing, in a tank, a volume of water of which the temperature is higher than a predetermined temperature, the water in the tank being heated periodically in a predetermined time range by at least one resistor so as to arrive at a setpoint temperature, each time water is withdrawn from the tank, the same quantity of water as that withdrawn being introduced into the tank, the quantity of water introduced being at a temperature referred to as low, the volume of water introduced into the tank each time water is withdrawn from the tank forming a stratum of water at the low temperature and not mixing with at least one other stratum of water in the tank of which the temperature is different, **characterized in that** the method involves the steps of:

> - determining the flow rate and a temperature of the water at the outlet of the tank when water is withdrawn from the tank,
> - determining the volume of water withdrawn at the end of the withdrawal of the water,
> - updating the volume of water contained in at least one stratum of the tank on the basis of the volume of water withdrawn, the updating of the at least one stratum being effected:
>
>> - by selecting the highest stratum of a status table of the tank comprising the volumes and the temperatures of each stratum,
>> - by subtracting, from the volume of the selected stratum, the volume of water withdrawn if the volume of the selected stratum is greater than the volume of water withdrawn,
>> - by subtracting, if the volume of the selected stratum is less than the volume of water withdrawn, the volume of the selected stratum, by selecting the next stratum of the tank status table and by reiterating the subtraction step;
>> - by creating a new stratum if the temperature of the stratum having the lowest temperature among the temperatures of the strata of the tank is greater than the low temperature,
>> - by adding the volume of water withdrawn to the volume of the stratum having the lowest temperature if the temperature of the stratum having the lowest temperature among the temperatures of the strata of the tank is equal to the low temperature,
>> - updating, when the water in the tank is heated, strata of the status table of the tank, by taking into account the electrical energy that has been injected into the tank,
>> - determining the volume of water in the tank of which the temperature is higher than or equal to a predetermined temperature, the determination of the volume of water in the tank of which the temperature is higher than or equal to the predetermined temperature being effected by adding all the volumes of the strata of the status table of the tank of which the temperature is higher than the predetermined temperature,
>> - commanding the heating of at least some of the water in the tank outside the predetermined time range if the volume of water in the tank, of which the temperature is higher than or equal to a predetermined water temperature, is below a threshold.

10. Method according to Claim 9, **characterized in that** the method uses, during the execution of the determination and updating steps, variables that are reset at the end of each predetermined time range.

11. Computer program, **characterized in that** it comprises instructions for a device for managing the quantity of water present in a tank to implement the method according to either of Claims 9 and 10, when said program is executed by the device.

12. Storage medium on which is stored a computer program comprising instructions for a device for managing the quantity of water present in a tank to implement the method according to either of Claims 9 and 10, when said program is executed by the device.

Fig. 1

10

205

| Interface Réseau | | Proc | 200 |

206

| Interface Ballon | | ROM | 202 |
| | | RAM | 203 |
| | | SD | 204 |

201

Fig. 2

Fig. 3

Fig. 4

E50 — Début

E51 — Calcul débit/température

E52 — Mémorisation débit

E53 — Débit>0

E56 — Débit précédent >0

E54 — Volume soutiré = Volume soutiré + Débit*T

E57 — Fin soutirage = oui
Soutirage en cours = non

E55 — Fin soutirage = non
Soutirage en cours = oui

E58 — Fin soutirage = non
Soutirage en cours = non

Fig. 5

E60 — Début

E61 — Chauffe en cours
ou fin Chauffe ?

E62 — Etat du ballon

E63 — soutirage en cours
ou fin sous tirage ?

E64 — Etat du ballon

Fig. 6

Fig. 7

E800 — Début

E801 — Calcul des strates pour les deux parties du ballon

E802 — Exécution algorithme Fig. 9 pour partie haute du ballon

E803 — Chauffe tiers ?

Vers E805

E804 — Temps restant > 0 ?

E806 — Exécution algorithme Fig. 9 pour partie basse du ballon

E805 — Mise à jour état du ballon
Calcul Temps de Chauffe

Fig. 8

E900 — Début

E901 — Obtention des strates
Calcul E_injectée
E_restante = E_injectée
E_demande_total = 0

E902 — Strate la plus basse

E903 — V_strate_actuel = Volume strate
T_strate_actuel = Température

E904 — Strate la plus Haute ?

E905 — Mise à jour

E906 — $\Delta T$ = T_Stratesup - T_strate_actuel
E_demande =
V_strate_actuel/1000*1157,68* $\Delta T$

E907 — E_restante = E_demande ?

E908 — Calcul T_strate_actuel
V_strate_actuel
E_restante
E_demande_total
Strate suivante

E909 — Calcul température nouvelle strate
Calcul E_demande_total
Strate suivante

Vers E903

Vers E903

Fig. 9

Fig. 10

E1100 — Début

E1101 — Obtention strates ballon

E1102 — Strate le plus haut

E1103

T_strate_actuel
> 40 ?

E1104

V_dispo = V_dispo +
V_strate_actuel*(T_strate_actuel
– T_EF)/(40-T_EF)
Strate suivante

Vers E1103

Fig. 11

E1200 — Début

E1201 — Calcul temps de charge complète

E1202 — Calcul V_sum_charge

E1203 — V_dispo < V_ballon/3 ?

E1204 — V_ballon/3 > V_sum_charge ?

E1206 — Calcul V_sum charge_40

E1205 — Ordre de chauffe Calcul temps de chauffe

E1207 — V_ballon > V_sum_charge_40?

E1208 — Ordre de chauffe Calcul temps de chauffe

E1209 — Ordre de chauffe Temps de chauffe complet

Fig. 12

E1300

Début

E1320

Nouvel ordre de
chauffe ?

E1321

Réinitialisation

E1301

Ordre de chauffe
?

E1302

Relais OFF
Chauffe en cours = non
Fin de chauffe = non
Temps chauffé=0

E1303

Temps de chauffe
>
Temps chauffé ?

E1305

Soutirage
En cours ?

E1304

Relais OFF

E1306

Anti-court
Cycle ?

E1309

Précédent chauffe en
cours ?

E1307

Relais ON
Chauffe en cours =
oui
Fin de chauffe
= non
Temps chauffé =
temps chauffé+
Temps écoulé

E1310

Relais OFF
Chauffe en cours = non
Fin de chauffe = oui
Temps chauffé= temps chauffé

E1308

Relais OFF
Décrémentation
Anti court-cycle

E1311

Relais OFF
Chauffe en cours = non
Fin de chauffe = non
Temps chauffé = temps chauffé

Fig. 13

E1400 — Début

E1401 — Soutirage en Cours ?

E1402 — Tempo écoulée ?

E1405 — Décrémentation de la temporisation Tempo

E1403 — Température < 39° ?

E1404 — Notification

Fig. 14

E1500 — Début

E1501 — Etat du ballon

E1502 — V_dispo = V_dispo + V_strate_actuel*(T_strate_actuel – T_EF)/(40-T_EF) Strate suivante

E1503 — Notification

Fig. 15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3394518 A
- EP 2739914 A
- WO 2014087162 A
- GB 2470899 A